# EUROPÄISCHE PATENTSCHRIFT

(11) **EP 2 756 993 B1**
(45) Veröffentlichungstag und Bekanntmachung des Hinweises auf die Patenterteilung: **01.06.2016**
(21) Anmeldenummer: 14150771.5
(22) Anmeldetag: 10.01.2014
(51) Int. Cl.: B60R 5/04

(54) **Verstellvorrichtung mit einer ein Endstück aufweisenden Abdeckung für einen Laderaum eines Fahrzeugs**
Driving device for a covering system for a storage space of a vehicle, said covering system having an end element.
Dispositif d'entraînement d'un moyen de recouvrement d'un espace de chargement de véhicule, ledit moyen de recouvrement comportant une partie terminale.

(30) Priorität: 18.01.2013 DE 102013200769
(43) Veröffentlichungstag der Anmeldung: 23.07.2014
(73) Patentinhaber: Brose Fahrzeugteile GmbH & Co. Kommanditgesellschaft, Coburg, Max-Brose-Straße 1 96450 Coburg (DE)
(72) Erfinder: Dietzel, Renee, 96242 Sonnefeld (DE); Kolb, Vincenzina, 96486 Lautertal (DE)
(74) Vertreter: Maikowski & Ninnemann

(56) Entgegenhaltungen:
- EP-A1- 2 329 991
- DE-A1- 10 235 870
- DE-A1-102007 019 858
- DE-A1-102007 057 073
- DE-A1-102008 061 106
- DE-C1- 19 944 948

## Beschreibung

Die vorliegende Erfindung betrifft eine Verstellvorrichtung mit einer Abdeckung für einen Laderaum eines Fahrzeugs und mit einer motorischen Antriebseinrichtung nach dem Oberbegriff des Anspruchs 1. bzw. 2. Die DE 10 2008 061 106 A1 zeigt eine solche Verstellvorrichtung.

Bei einer bekannten Verstellvorrichtung wird die Abdeckung mittels der motorischen Antriebseinrichtung wenigstens aus einer ersten Verstellposition, in der ein Flächenabschnitt der Abdeckung den Laderaum nicht überdeckt, entlang einer Schließrichtung in eine zweite Verstellposition überführt, in der der Flächenabschnitt den Laderaum des Fahrzeugs wenigstens teilweise, insbesondere vollständig überdeckt. Über die Antriebseinrichtung ist dabei regelmäßig eine vordere, quer verlaufende Kante der Abdeckung fremdkraftbetätigt verstellbar, so dass die Abdeckung zwischen einer geöffneten Verstellposition und einer geschlossenen Verstellposition hin- und herverfahren werden kann. Der Flächenabschnitt, der zu der Überdeckung des Laderaums vorgesehen ist, befindet sich dabei in der geöffneten Verstellposition der Abdeckung üblicherweise aufgewickelt auf einer drehbar in einem Gehäuse gelagerten Welle und wird zum Überführen in die geschlossene Verstellposition aus diesem Gehäuse herausgezogen und hierbei von der Welle abgewickelt.

Bei einer Abdeckung, die für einen heckseitigen Laderaum eines Fahrzeugs vorgesehen ist, befindet sich das Gehäuse beispielsweise im Bereich der hinteren Sitzreihe und ist fahrzeugseitig festgelegt.

Bei dem ausziehbaren Flächenabschnitt handelt es sich üblicherweise um eine flexible Textil- und/oder Kunststoff-Plane. Die Plane schließt an ihrem in Schließrichtung liegenden und beispielsweise einer Heckklappe zugewandten Ende mit einem eigensteifen Endstück ab. Während die Plane eine geringe Steifigkeit aufweist und ohne geeignete Führung und/oder Verstrebungen in ihrem ausgezogenen Zustand keine plane Fläche bilden würde, handelt es sich bei dem Endstück um einen regelmäßig plattenförmigen oder stabförmigen Körper mit größerer Steifigkeit, der z.B. aus einem Hartplastik gefertigt ist und der sich nicht ohne Weiteres, d.h., insbesondere nicht unter Einwirkung der Schwerkraft verformt. Dieses eigensteife Endstück kann beispielsweise eine Griffmulde oder Grifföffnung für das manuelle Öffnen und/oder Schließen der Abdeckung aufweisen. Üblicherweise ist dieses Endstück in einem festen Winkel geneigt zu dem im Wesentlichen entlang einer horizontalen ausziehbaren Flächenabschnitt der Abdeckung angeordnet oder relativ zu dem Flächenabschnitt verschwenkbar um eine horizontale und quer zu der Schließrichtung verlaufende Achse ausgeführt.

Die DE 102 35 870 A1, DE 199 44 948 C1 und DE 10 2007 057 073 A1 zeigen beispielhaft Verstellvorrichtungen mit einer Abdeckung für einen Laderaum eines Kraftfahrzeugs und einer motorischen Antriebseinrichtung zum fremdkraftbetätigten Öffnen und Schließen der Abdeckung, so dass die Abdeckung beispielsweise aus einer vollständig eingefahrenen Verstellposition mittels eines Antriebsmotors der Antriebseinrichtung in eine geschlossene Verstellposition verstellt werden kann, in der der Laderaum von der Abdeckung vollständig überdeckt ist.

Bei einer derartigen motorischen Verstellung der Abdeckung besteht nun aber das Problem, dass ein endseitig angeordnetes und in Schließrichtung liegendes steifes Endstück der Abdeckung in einer geschlossenen Verstellposition der Abdeckung einen möglichst effizienten Sichtschutz bereitstellen sollen und hierfür in einem bestimmten Winkel geneigt zu dem im Wesentlichen entlang einer horizontalen aus- und einfahrbaren Flächenabschnitt angeordnet sein soll. Bei einer motorischen Verstellung kann dann aber das abgewinkelte Endstück aber mit eventuell in dem Laderaum angeordneten Gegenständen, z. B. Gepäckstücken, kollidieren.

Der vorliegenden Erfindung liegt daher die Aufgabe zugrunde, eine Verstellvorrichtung für die fremdkraftbetätigte Verstellung einer Abdeckung für einen Laderaum eines Fahrzeugs weiter zu verbessern, um die oben angegebenen Nachteile zu überwinden und insbesondere das Risiko für eine Kollision eines (steifen) endseitigen Endstücks der Abdeckung mit in dem Laderaum angeordneten Gegenständen bei dem motorischen Überführen der Abdeckung zwischen einer ersten, offenen Verstellposition und einer zweiten, geschlossenen Verstellposition zu minimieren und dabei weiterhin einen möglichst optimalen Sichtschutz durch die Abdeckung in der zweiten, geschlossenen Verstellposition sicherzustellen.

Diese Aufgabe wird erfindungsgemäß mit einer Verstellvorrichtung des Anspruchs 1. bzw 2 gelöst.

Bei einer derartigen Verstellvorrichtung weist die Antriebseinrichtung wenigstens eine Führung und ein entlang der Führung geführtes Mitnehmerelement auf, das mit der Abdeckung verbunden und beim Überführen der Abdeckung in ihre zweite Verstellposition entlang der Führung verstellbar ist. Das (eigensteife) in Schließrichtung der Abdeckung liegende und endseitig an der Abdeckung angeordnete Endstück, das gegenüber dem für die Überdeckung des Laderaums vorgesehenen Flächenabschnitts schwenkbar gelagert ist, ist mit dem Mitnehmerelement wirkverbunden, vorzugsweise über ein sich quer zu Schließrichtung erstreckendes, schwenkbares Übertragungselement in Form einer Zugstange. Dabei ist das Mitnehmerelement derart ausgebildet und entlang der Führung verstellbar, dass das Endstück während des Überführens der Abdeckung in die zweite Verstellposition in einer Relativlage zu dem Flächenabschnitt gehalten ist, in der das Endstück eine geringere Neigung zu dem Flächenabschnitt in Richtung des Laderaums aufweist als in der zweiten Verstellposition.

Erfindungsgemäß ist weiterhin vorgesehen, dass das Mitnehmerelement zwischen wenigstens zwei Positionen an seiner (körperlichen) Führung verschwenkbar ist, um eine Neigung des Endstücks zu dem Flächenabschnitt zu verändern. Dabei soll das Mitnehmerelement in den wenigstens zwei Positionen bezüglich seiner Führung unterschiedlich ausgerichtet sein und dem Endstück durch die erste Position des Mitnehmerelements eine andere Relativlage zu dem Flächenabschnitt vorgegeben werden als durch die zweite Position.

Das Mitnehmerelement ist hier somit nicht nur entlang seiner Führung und einer hierdurch vorgegebenen längserstreckten Führungsbahn verstellbar, vorzugsweise verschieblich, um eine Verstellung der Abdeckung zwischen ihren beiden Verstellpositionen zu ermöglichen, sondern auch in seiner Ausrichtung relativ hierzu. Folglich ist das Mitnehmerelement erfindungsgemäß nicht nur längs einer längserstreckten körperlichen Führung verschieblich, sondern verfügt an der Führung über einen zusätzlichen Freiheitsgrad, so dass das Mitnehmerelement zusätzlich auch verschwenkt bzw. verkippt werden kann. Das Mitnehmerelement kann somit an der Führung in einer ersten Position eine andere Ausrichtung bezüglich der Schließrichtung und bezüglich den Wandungen eines Führungskanals der Führung für das Mitnehmerelement einnehmen als in einer zweiten Position.

Demgemäß wird das Endstück der Abdeckung nur in der zweiten Verstellposition der Abdeckung in der gewünschten abgewinkelten Stellung mit der maximalen Neigung zu dem (ausgezogenen) Flächenabschnitt positioniert. Zumindest beim Verfahren von einer ersten, offenen Verstellposition in eine zweite, geschlossene Verstellposition der Abdeckung wird die Neigung bzw. der Neigungswinkel des Endstücks zu dem Flächenabschnitt kleiner gehalten, also das Endstück in einer entsprechend angepassten, anderen Relativlage zu dem Flächenabschnitt gehalten als in der zweiten, geschlossenen Verstellposition. Dabei kann eine geringere Neigung während des Überführens von der ersten in die zweite Verstellposition insbesondere bedeuten, dass das Endstück keine Neigung zu dem Flächenabschnitt aufweist, also das Endstück und der Flächenabschnitt zueinander parallel verlaufen, während die Abdeckung verstellt wird.

Das Mitnehmerelement ist an seiner Führung zwischen den wenigstens zwei Positionen um eine Achse verschwenkbar, die senkrecht zur Schließrichtung verläuft. Hierbei ist das Mitnehmerelement (vollständig) innerhalb eines Führungskanals der Führung verschieblich untergebracht und in diesem zusätzlich zwischen den wenigstens zwei Positionen verschwenkbar.

Die Neigung des Endstücks zu dem den Laderaum flächig überdeckenden Flächenabschnitt erreicht in der zweiten Verstellposition wenigstens einen vorgegebenen Minimalwert. Während der Verstellung der Abdeckung wird die Neigung des Endstücks in Richtung des Laderaums demgegenüber auf einen unter dem Minimalwert liegenden Maximalwert begrenzt.

Mit der erfindungsgemäßen Lösung wird erreicht, dass eine fremdkraftbetätigte Verstellung der Abdeckung, insbesondere um diese zu schließen, kaum noch das Risiko birgt, dass das endseitig angeordnete und in der geschlossenen Stellung (stärker) relativ zu dem sich im Wesentlichen horizontal über den Laderaum erstreckenden Flächenabschnitt geneigte Endstück mit einem Gegenstand in dem Laderaum kollidiert (außer ein Gegenstand ragt auch in die Verstellbahn des Flächenabschnitts hinein). Das endseitige, eigensteife Endstück wird somit über das entlang einer laderaumseitigen Führung geführte Mitnehmerelement während einer Verstellung der Abdeckung zwischen der offenen und der geschlossenen Verstellposition zwischen wenigstens zwei vordefinierten Relativlagen zu dem Flächenabschnitt gezielt verschwenkt. Der Flächenabschnitt ist hierbei gegenüber dem Endstück vorzugsweise weniger steif und vielmehr flexibel ausgeführt, so dass der Flächenabschnitt von einer Welle auf- und abwickelbar ist.

Demgemäß kann eine Verstellvorrichtung auch ein fahrzeugseitig festgelegtes Gehäuse umfassen, in dem eine Welle für den Flächenabschnitt drehbar gelagert ist. Der Flächenabschnitt ist dann in einer ersten, offenen Verstellposition der Abdeckung nahezu vollständig aufgewickelt auf der Welle in dem Gehäuse untergebracht und wird beim Überführen der Abdeckung in ihre zweite, geschlossene Verstellposition aus dem Gehäuse ausgezogen und von der Welle abgewickelt. Das steife, in Schließrichtung liegende und beispielsweise einer Heckklappe eines Kraftfahrzeugs zugewandte Endstück ragt dabei üblicherweise auch in der ersten, offenen Verstellposition der Abdeckung aus dem Gehäuse hervor, so dass die Abdeckung in einer Ausführungsvariante auch durch manuelles Angreifen an dem Endstück und ohne die Hilfe eines Antriebsmotors der Antriebseinrichtung ausgezogen werden kann.

Für das fremdkraftbetätigte, motorische Verstellen der Abdeckung kann die Antriebseinrichtung beispielsweise einen Zahnstangenantrieb, Bowdenzüge, Gewindewellen, Seil- oder Riementriebe aufweisen, die eine Verstellkraft eines Antriebsmotors oder mehrerer Antriebsmotoren an die Abdeckung übertragen. Dabei kann beispielsweise auch das mit dem Endstück in Verbindung stehende Mitnehmerelement über einen solchen Antriebsmotor antreibbar sein, um die Abdeckung zu verstellen. Eine Verstellkraft zum Verstellen des Mitnehmerelements entlang der jeweiligen Führung wird somit über einen Antriebsmotor in das Mitnehmerelement durch geeignete Übertragungsmittel, wie beispielsweise eine Zahnstange oder einen Seilzug, eingeleitet und hierüber die Abdeckung in ihre zweite Verstellposition und damit ihre geschlossene Stellung überführt.

Vorzugsweise sind mehrere, insbesondere zwei Mitnehmerelemente vorgesehen, die jeweils in einer von zwei an gegenüberliegenden Längskanten der Abdeckung angeordneten Führungen geführt sind. Diese Führungen bilden jeweils an einer den Laderaum begrenzenden Seitenwandung einen Führungskanal aus, der die Verstellbahn für die Abdeckung vorgibt und der über den Großteil seiner Erstreckung im Wesentlichen horizontal verläuft.

In bevorzugten Ausführungsvarianten gibt das Mitnehmerelement in der zweiten Verstellposition der Abdeckung eine bestimmte Neigung des Endstücks zudem den Laderaum zumindest teilweise überdeckenden Flächenabschnitt vor. Dies bedeutet mit anderen Worten, dass die Ausrichtung des Endstücks auch in der zweiten Verstellposition und damit üblicherweise der geschlossenen Stellung der Abdeckung nicht beliebig ist, sondern durch das wenigstens eine entlang einer Führung (zwangs-) geführte Mitnehmerelement definiert ist.

Zur Vorgabe der unterschiedlichen Relativlagen des Endstücks bezüglich des-vorzugsweise von einer Welle abwickelbaren - Flächenabschnitts der Abdeckung einerseits während der Verstellung in die zweite Verstellposition und andererseits in der zweiten Verstellposition ist zumindest ein Abschnitt des Mitnehmerelements vorzugsweise im Wesentlichen schräg zur Schließrichtung verlagerbar. Das Mitnehmerelement ist hier somit nicht nur entlang der Schließrichtung entlang seiner zugeordneten Führung verstellbar, sondern auch quer zu der Schließrichtung an oder innerhalb der Führung, um hierdurch eine Neigung des Endstücks variieren zu können. Dem Mitnehmerelement kann somit eine Bewegung entlang der Führung vorgegeben werden, bei der eine Verstellung parallel zur Schließrichtung mit einer Verstellung senkrecht zur Schließrichtung überlagert wird, so dass das Mitnehmerelement beispielsweise verkippt wird.

Vorzugsweise ist die Führung hierbei derart ausgebildet, dass zumindest ein Abschnitt des Mitnehmerelements durch die Führung beim Erreichen der zweiten Verstellposition der Abdeckung im Wesentlichen (auch) schräg zur Schließrichtung verlagert wird, um dem Endstück, kurz bevor die Abdeckung ihre zweite Verstellposition erreicht und beispielsweise zum vollständigen Überdecken des Laderaums komplett geschlossen ist, eine größere Neigung zu den Flächenabschnitt vorzugeben als während der vorangegangenen Verstellung. Die Führung für das Mitnehmerelement weist dementsprechend hier vorzugsweise entsprechend ausgestaltete Abschnitte auf, die eine Verlagerung des Mitnehmerelements erzwingen, wenn das Mitnehmerelement entlang der Führung in eine zu der zweiten Verstellposition der Abdeckung korrespondierende Endposition verschoben wird. Die Führung gibt somit über eine sich entlang ihrer Längserstreckung ändernde Innenkontur dem Mitnehmerelement eine Führungsbahn vor, entlang der das Mitnehmerelement verschoben wird und die aufgrund ihrer Geometrie eine Verlagerung zumindest eines Abschnitts des Mitnehmerelements, insbesondere eine Verschiebung oder Drehung, quer zur Schließrichtung erzwingt, wenn die Abdeckung ihre zweite Verstellposition erreicht und beispielsweise vollständig geschlossen ist. Hierdurch nimmt das mit dem Mitnehmerelement verbundene Endstück die gewünschte (größere) Neigung zu dem ausgezogenem und den Laderaum überdeckenden Flächenabschnitt ein.

In einer Ausführungsvariante wird es bevorzugt, dass die Führung einen Endabschnitt aufweist, in dem das Mitnehmerelement in der zweiten Verstellposition der Abdeckung zumindest teilweise aufgenommen ist, und dass der Endabschnitt und das Mitnehmerelement derart ausgebildet sind, dass bei einer Verstellung des Mitnehmerelements in dem Endabschnitt eine Neigung des Endstücks zu dem Flächenabschnitt zunimmt, bis die zweite Verstellposition erreicht ist. Der Endabschnitt der Führung definiert somit beispielsweise einen abgewinkelten Bereich der Führungsbahn für das Mitnehmerelement. So kann das Mitnehmerelement in dem Endabschnitt bezüglich eines geradlinig verlaufenden Bereichs der Führungsbahn geneigt, insbesondere geneigt zu der Horizontalen geführt sein, um dem Endstück der Abdeckung den gewünschten (größeren) Neigungswinkel vorzugeben. Die in dem Endabschnitt vorgegebene Führungsbahn kann dabei zum Beispiel auch einen bogenförmigen Verlauf aufweisen.

Alternativ oder ergänzend kann die Führung an einem Endabschnitt einen Formschlussbereich aufweisen, in dem das Mitnehmerelement in der zweiten Verstellposition der Abdeckung formschlüssig gehalten ist. Ein solcher Formschlussbereich ist somit hinsichtlich seiner Kontur an die Kontur des Mitnehmerelements angepasst und hierauf so abgestimmt, dass das Mitnehmerelement in dem Formschlussbereich arretiert ist, aber ein Lösen des Formschlusses zum Öffnen der Abdeckung problemlos möglich ist.

Um in den Formschlussbereich zu gelangen, kann bei einem Überführen der Abdeckung in ihre zweite Verstellposition wenigstens ein Abschnitt des Mitnehmerelements geneigt zu der bisherigen Führungsbahn an einer Führungsschräge entlang geführt werden, wodurch der wenigstens eine Abschnitt des Mitnehmerelements quer zur Schließrichtung verlagert, insbesondere verschoben und/oder verschwenkt wird. Dem Mitnehmerelement wird somit eine Bewegung quer zur Schließrichtung über die Führungsschräge aufgezwungen, damit das Mitnehmerelement in den Formschlussbereich einfährt, bevor die Abdeckung endgültig ihre zweite, geschlossenen Verstellposition erreicht.

Erfindungsgemäß weist die Führung zumindest an einem Endabschnitt wenigstens eine Führungskulisse auf, über die wenigstens ein Abschnitt des Mitnehmerelements schräg zur Schließrichtung verlagert insbesondere verschwenkt wird, bevor die Abdeckung ihre zweite Verstellposition erreicht. Das Mitnehmerelement greift hierbei zum Beispiel an dem Endabschnitt über einen an dem Mitnehmerelement angeordneten oder ausgebildeten Führungsabschnitt - vorzugsweise in Form eines Führungszapfens oder Gleitsteins - in die Führungskulisse des Endabschnitts ein und ist hierin gleitend geführt, so dass bei einer (weiteren) Verstellung des Mitnehmerelements dem Mitnehmerelement über die Führungskulisse eine Lageänderung bezüglich der Führung aufgezwungen wird. Diese dem Mitnehmerelement über eine oder mehrere Führungskulissen an einem Endabschnitt der Führung vorgegebene Lageänderung kann dabei auch quer zur Schließrichtung erfolgen und/oder um das Mitnehmerelement in einem Formschlussbereich am Ende der Führung einfahren zu lassen.

In einer Ausführungsvariante kann die Führung wenigstens eine Führungskulisse aufweisen, die sich nicht nur in dem Endabschnitt ausgebildet ist, sondern sich über nahezu die gesamte Länge der Führung erstreckt, so dass das Mitnehmerelement über seinen gesamten möglichen Verstellweg entlang der Führung in diese Führungskulisse eingreift.

Erfindungsgemäß ist das Mitnehmerelement zwischen einer ersten und zweiten Position innerhalb der Führung verlagerbar, um die Relativlage des damit verbundenen Endstücks zu dem Flächenabschnitt gezielt zu variieren. Erfindungsgemäß ist vorgesehen dass das Mitnehmerelement
- in die erste Position durch eine Federkraft vorgespannt ist,
- in die zweite Position entgegen der Federkraft verlagert ist, wenn die Abdeckung ihre zweite Verstellposition einnimmt, und
- in der ersten Position dem Endstück eine Neigung zu dem Flächenabschnitt vorgibt, die geringer ist als in der zweiten Position.

So wird beispielsweise über ein an dem Mitnehmerelement angreifendes Federelement während einer Verstellung der Abdeckung und solange die Abdeckung ihre zweite, geschlossene Verstellposition noch nicht erreicht hat, das Mitnehmerelement in die erste Position federbelastet, so dass sich das Endstück parallel zu dem Flächenabschnitt oder zumindest nur mit einer geringen Neigung hierzu erstreckt. Über den Verlauf der Führung wird dem Mitnehmerelement hier beispielsweise entgegen der Federkraft des Federelements eine Verlagerung in seine zweite Position aufgezwungen, wenn die Abdeckung über einen Antriebsmotor der Antriebseinrichtung in ihre zweite, geschlossene Verstellposition verfahren wird.

Eine Ausführung zur Vorbelastung des Mitnehmerelements in seine erste Position für die Vorgabe einer geringeren Neigung des Endstücks sieht vor, hierfür eine auf ein mit dem Flächenabschnitt verbundenes Übertragungselement wirkende Federvorspannung und/oder eine auf den Flächenabschnitt selbst wirkende Federvorspannung zu nutzen.

Ein Übertragungselement wird hierbei beispielsweise von einer sich quer zur Schließrichtung erstreckenden Zugstange gebildet, die an dem Flächenabschnitt schwenkbar gelagert ist und an der das Endstück festgelegt ist, so dass ein Verschwenken der Zugstange unmittelbar zu einem Verschwenken des Endstücks führt. Ein Ende einer solchen Zugstange ist in einer bevorzugten Ausführungsvariante mit dem Mitnehmerelement verbunden. Hierdurch können der Zugstange und damit dem Endstück mittels einer Lageänderung des Mitnehmerelements bezüglich seiner Führung unterschiedliche Neigungen vorgegeben werden. Steht die Zugstange unter einer Federvorspannung, die die Zugstange in eine Relativlage zu dem Flächenabschnitt vorbelastet, wird hierüber das mit der Zugstange verbundene Mitnehmerelement in eine erste Position innerhalb seiner Führung vorgespannt.

Eine an dem Flächenabschnitt angreifende Federvorspannung wiederum wirkt entgegen der Schließrichtung der Abdeckung und führt die Abdeckung automatisch in ihre offene Verstellposition zurück, wenn eine Arretierung der Abdeckung beispielsweise an einer der Führungen oder an einem anderen Teil der Antriebseinrichtung manuell oder automatisiert gelöst wird. Eine Federvorspannung kann zum Beispiel in an sich bekannter Weise an der Welle für den aufwickelbaren Flächenabschnitt angreifen, so dass der Flächenabschnitt automatisch wieder auf die Welle aufgewickelt wird, wenn der zur Überdeckung des Laderaums ausgezogene bzw. abgewickelte Flächenabschnitt nicht mehr arretiert ist. Diese Federvorspannung zieht somit den Flächenabschnitt und das daran angelenkte Endstück in eine zu der Schließrichtung entgegensetzte Richtung. Über das Endstück und/oder den Flächenabschnitt, das bzw. der mit dem Mitnehmerelement verbunden ist, wird somit auch das Mitnehmerelement entgegengesetzt zur Schließrichtung über die Federvorspannung belastet.

Indem nun zum Beispiel die Höhe der Führung größer gewählt ist als die Höhe des darin geführten Mitnehmerelements, kann das Mitnehmerelement darin - bei geeignet gewählten Kraftangriffspunkt an dem Mitnehmerelement - infolge der jeweiligen Federvorspannung (z.B. im Uhrzeigersinn) verkippen und verbleibt in seiner verkippten Lage, wenn die Führung die Kippbewegung begrenzt. In der verkippten Lage des Mitnehmerelements nimmt das damit verbundene Endstück seine Relativlage mit geringer oder keiner Neigung zu dem Flächenabschnitt ein. Zum Beispiel über eine Verjüngung der Führung entlang einer Führungsschräge oder eine in der Führung zusätzlich vorgesehene Kulissenführung wird das Mitnehmerelement dann entgegen der eingeleiteten Federkraft (entgegen dem Uhrzeigersinn) verschwenkt, wenn die Abdeckung vollständig geschlossen wird, um hierdurch dem Endstück die gewünschte (größere) Neigung zu dem Flächenabschnitt vorzugeben,

In einer Ausführungsvariante ist gegebenenfalls ergänzend zu den zuvor erläuterten Merkmalen vorgesehen, dass das Mitnehmerelement mehrteilig ausgeführt ist. Dies schließt beispielsweise eine Ausführung ein, bei der
- wenigstens ein zweites Mitnehmerteil des Mitnehmerelements relativ zu einem ersten Mitnehmerteil des Mitnehmerelements zwischen einer ersten und einer zweiten Position verlagerbar ist und
- das zweite Mitnehmerteil während des Überführens der Abdeckung in ihre zweite (geschlossene) Verstellposition in der ersten Position gehalten ist, wodurch dem Endstück eine geringere Neigung zu dem Flächenabschnitt vorgegeben wird als in der zweiten Position, die das zweite Mitnehmerteil in der zweiten Verstellposition der Abdeckung einnimmt.

Die zweite Position der beiden Mitnehmerteile relativ zueinander ist auch hierbei vorzugsweise durch die Geometrie der Führung vorgegeben, entlang der das Mitnehmerelement während einer Verstellung der Abdeckung gleitend geführt ist.

In der zweiten Position des zweiten Mitnehmerteils kann sich dieses beispielsweise geneigt zu der Schließrichtung und abgewinkelt zu dem ersten Mitnehmerteil erstrecken. Diese zweite Position des zweiten Mitnehmerteils relativ zu dem ersten Mitnehmerteil kann beispielsweise durch ein an dem zweiten Mitnehmerteil angreifendes Federelement vorgegeben sein, die das zweite Mitnehmerteil in die erste Position vorbelastet.

Eine alternative Ausführung zur Vorbelastung des zweiten Mitnehmerteils in seine erste Position für die Vorgabe einer geringeren Neigung des Endstücks sieht vor, dass ein Abschnitt des Endstücks an dem zweiten Mitnehmerteil und ein elastischer Bereich des Flächenabschnitts, mit dem auch das Endstück verbunden ist, an dem anderen, ersten Mitnehmerteil festgelegt sind, so dass aufgrund der dem elastischen Bereich des Flächenabschnitts innewohnenden Elastizität das mit dem Endstück verbundene zweite Mitnehmerteil in Richtung des (unmittelbar) mit dem Flächenabschnitt verbundenen ersten Mitnehmerteils gezogen wird. Indem der Flächenabschnitt zumindest lokal in dem Bereich, in dem die Anbindung an das Mitnehmerelement erfolgt oder sogar vollständig aus einem elastischen Material hergestellt ist, wird hier eine Elastizität der Abdeckung ausgenutzt, um bei einem wenigstens zweiteilig ausgeführten Mitnehmerelement eine für die Verstellung der Abdeckung vorteilhafte Lage des Endstücks vorzugeben.

Eine andere Alternative wäre das Vorsehen einer Zugfeder zwischen dem beiden Mitnehmerteilen derart, dass das zweite Mitnehmerteil, das an dem ersten Mitnehmerteil angelenkt ist, in Richtung des ersten Mitnehmerteils gezogen und damit verkippt wird.

Die Führung für das Mitnehmerelement begrenzt in den vorgenannten Varianten die Verlagerung des zweiten Mitnehmerteils relativ zu dem ersten Mitnehmerteil, so dass die beiden Mitnehmerteile eine vorgegebene Relativlage zueinander einnehmen, in der das Endstück eine vergleichsweise geringe oder keine Neigung zu dem Flächenabschnitt aufweist.

In Analogie zu einer bereits zuvor erläuterten Variante wird bevorzugt vorgesehen, eine Federvorspannung der Abdeckung und/oder eines Übertragungselements zu nutzen, um das zweite Mitnehmerteil relativ zu dem ersten Mitnehmerteil dauerhaft in einer ersten Position zu halten, insbesondere dauerhaft zu verkippen, bevor die Abdeckung ihre zweite Verstellposition einnimmt.

Vorzugsweise ist das zweite Mitnehmerteil hierfür zu dem ersten Mitnehmerteil verschwenkbar ausgeführt und wird beispielsweise durch ein Ende des Übertragungselements, insbesondere durch das Ende einer Zugstange gebildet. Mithilfe der Führung wird dann hier das das zweite Mitnehmerteil (das Ende der Zugstange) entgegen der durch die Federvorspannung eingeleiteten Federkraft verschwenkt, wenn die Abdeckung vollständig geschlossen werden und das Endstück eine (größere) Neidung zu dem den Laderaum überdeckenden Flächenabschnitt einnehmen soll. Vor Erreichen der zweiten, geschlossenen Verstellposition der Abdeckung wird hierfür das zweite Mitnehmerteil bevorzugt über eine Führungsschräge und/oder eine Führungskulisse, die an einem Endabschnitt der Führung vorgesehen sind, relativ zu dem ersten Mitnehmerteil entgegen der Federvorspannung in seine zweite Position verlagert, so dass das Endstück die gewünschte (größere) Neigung beziehungsweise den gewünschten (größeren) Neigungswinkel zu dem Flächenabschnitt einnimmt.

Das erste Mitnehmerteil ist hier bevorzugt zum Verschieben des zweiten Mitnehmerteils vorgesehen und bezogen auf die Schließrichtung hinter dem zweiten Mitnehmerteil angeordnet. Derart drückt das erste - gegebenenfalls von der Antriebseinrichtung angetriebene - Mitnehmerteil das zweite Mitnehmerteil bei einem Schließen der Abdeckung gegen die Führungsschräge, um das zweite Mitnehmerteil und das damit fest verbundene Endstück entgegen einer Federvorspannung zu verlagern.

Obwohl es selbstverständlich möglich ist, die Lage des Endstücks der Abdeckung über ein einzelnes Mitnehmerelement zu variieren, wird es bevorzugt, dass wenigstens zwei Mitnehmerelemente an gegenüberliegende Seiten des sich quer zur Schließrichtung erstreckenden Endstücks angeordnet und mit dem Endstück verbunden sind. Das Endstück ist somit symmetrisch an seinen quer zur Schließrichtung liegenden Enden mit je einem in einer zugeordneten Führung geführten Mitnehmerelement verbunden, wodurch die Verlagerung und Neigungsänderung des Endstücks auch bei großer Breite des zu überdeckenden Laderaums problemlos und klemmfrei möglich ist.

Bei dem Flächenabschnitt handelt es sich vorzugsweise um eine ausziehbare beziehungsweise ab- und aufwickelbare Abdeckplane als Teil einer Laderaumabdeckung für einen heckseitigen Laderaum eines Kraftfahrzeugs. Es kann sich hierbei aber beispielsweise auch um ein Trennnetz oder ein anderes zum Ab- oder Überdecken eines Laderaums geeignetes, sich (im ausgezogenen Zustand) flächig erstreckendes Gebilde handeln.

Weitere Vorteile und Merkmale der vorliegenden Erfindung werden bei der nachfolgenden Beschreibung von Ausführungsbeispielen anhand der Figuren deutlich werden.

Es zeigen:
- Fig. 1: eine geschnittene Seitenansicht einer ersten Ausführungsvariante einer erfindungsgemäße Verstellvorrichtung mit einem Mitnehmerelement und einem damit verbundenen Endstück einer Laderaumabdeckung in zwei unterschiedlichen Verstellpositionen der Laderaumabdeckung;
- Fig. 2: eine geschnittene Seitenansicht einer zweiten Ausführungsvariante einer erfindungsgemäßen Verstellvorrichtung mit einem gegenüber der Fig. 1 abgewandelten Mitnehmerelement und einer abgewandelten Führung für das Mitnehmerelement;
- Fig. 3: eine Abwandlung des Ausführungsbeispiels der Fig. 2 in übereinstimmender Ansicht als drittes Ausführungsbeispiel einer erfindungsgemäßen Verstellvorrichtung;
- Fig. 4: eine geschnittene Seitenansicht einer vierten Ausführungsvariante einer erfindungsgemäßen Verstellvorrichtung mit einem zweiteiligem Mitnehmerelement und einer Führung entsprechend den Ausführungsbeispielen der Fig. 2 und 3;
- Fig. 5: eine geschnittene Seitenansicht einer fünften Ausführungsvariante einer erfindungsgemäßen Verstellvorrichtung mit einer Kulissenführung bestehend aus zwei Führungskulissen an der Führung für eine Verlagerung des Mitnehmerelements von einer ersten Position in eine zweite Position innerhalb der Führung am Ende einer Verstellbewegung der Abdeckung;
- Fig. 6A: schematisch eine Verstellvorrichtung für einen heckseitigen Laderaum eines Kraftfahrzeugs mit einer Laderaumabdeckung in einer ersten, offenen Verstellposition;
- Fig. 6B: die Verstellvorrichtung der Fig. 6A mit der Laderaumabdeckung in einer zweiten, vollständig geschlossenen Verstellposition.

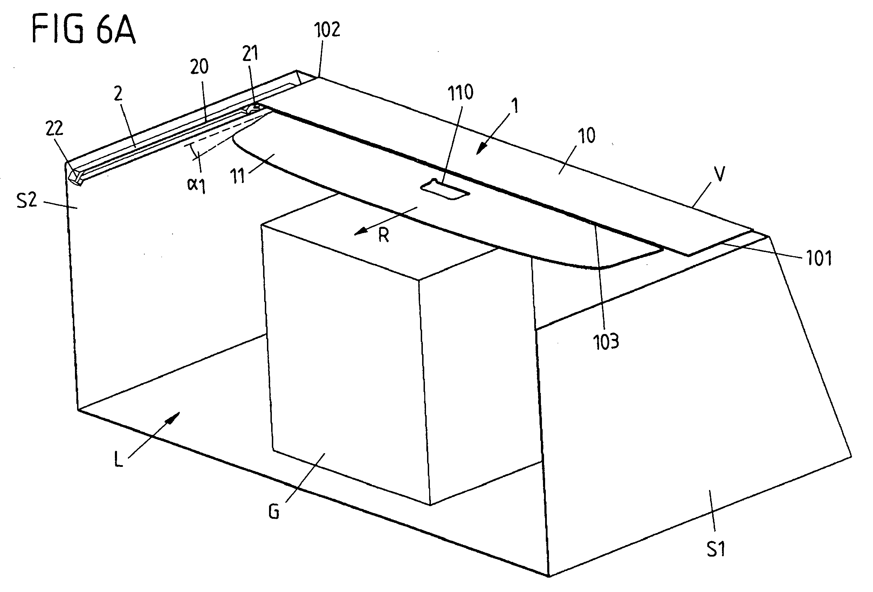

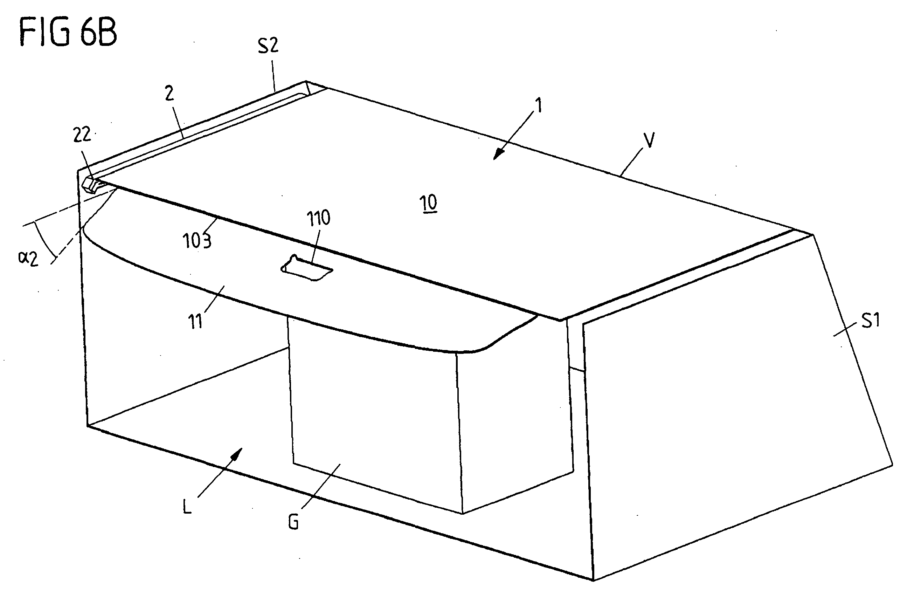

In den Fig. 6A und 6B ist eine Verstellvorrichtung mit einer Laderaumabdeckung 1 für einen Laderaum L eines Kraftfahrzeugs exemplarisch in zwei unterschiedlichen Verstellpositionen der Laderaumabdeckung 1 gezeigt. In der Fig. 6A befindet sich die Laderaumabdeckung 1 in einer ersten, offenen Verstellposition, in der die Laderaumabdeckung 1 maximal geöffnet und ein Flächenabschnitt der Laderaumabdeckung 1 in Form einer Abdeckplane 10 nahezu vollständig eingefahren ist. In der Fig. 6B ist die Laderaumabdeckung 1 in einer zweiten, geschlossenen Verstellposition dargestellt, in der die Abdeckplane 10 den Laderaum L vollständig überdeckt und sich horizontal über diesen hinweg erstreckt. Zum Überführen von der ersten, in der Fig. 6A dargestellten, offenen Verstellposition in der Fig. 6B dargestellten zweiten, geschlossenen Verstellposition wird die Laderaumabdeckung 1 von einer hier nicht näher dargestellten motorischen Antriebseinrichtung angetrieben.

Eine Antriebseinrichtung für die Laderaumabdeckung 1 kann beispielsweise einen oder mehrere Elektromotoren umfassen, die eine Verstellkraft an die Laderaumabdeckung 1 übertragen, um diese zwischen den beiden möglichen Endpositionen - offen und vollständig geschlossen - fremdkraftbetätigt verstellen zu können. Die Verstellkraft wird dabei über geeignete Übertragungsmittel, wie zum Beispiel Zahnstangen oder Seilzüge an Längskanten 101, 102 der Laderaumabdeckung 1 eingeleitet.

Diese Längskanten 101, 102 sind an sich gegenüberliegenden Führungen 2 der Verstellvorrichtung linear und hier entlang einer Horizontalen geführt, so dass sich die Abdeckplane 10 im ausgezogenen Zustand horizontal über den Laderaum L erstreckt. Ein Großteil der Führung 2 erstreckt sich damit im ausgezogenen Zustand der Laderaumabdeckung 1 seitlich an der Abdeckplane 2 entlang und im Wesentlichen in der derselben (horizontalen) Ebene wie die Abdeckplane 10.

Die Führung 2 ist dabei jeweils laderaumseitig an einer von zwei sich gegenüberliegenden und den Laderaum L seitlich berandenden Seitenwandung S1 oder S2 angeordnet. Die Führung 2 kann dabei beispielsweise durch eine separat an eine Seitenwandung S1, S2 montierte Führungsschiene ausgebildet sein oder in der jeweiligen Seitenwandung S1, S2, z.B. als Kulisse, ausgeformt sein. Die Führung 2 definiert jeweils einen Führungskanal 20, in dem die jeweilige Längskante 101 oder 102 aufgenommen ist und in dem ein Mitnehmer gleitend geführt ist. Dieser Mitnehmer kann dabei mit der Antriebseinrichtung gekoppelt sein, so dass hierüber die Verstellkraft in die Laderaumabdeckung 1 eingeleitet wird, um die Laderaumabdeckung 1 zu verstellen.

Der Mitnehmer liegt in der Fig. 6A und damit in der ersten Verstellposition der Laderaumabdeckung 1 an einem Halteabschnitt 21 an einer (linken) Führung 2 vor, die in den Fig. 6A und 6B an der einen Seitenwandung S2 vorgesehen und zu der in den Fig. 6A und 6B nicht dargestellten gegenüberliegt an der Seitenwandung S1 angeordneten Führung spiegelbildlich ausgestaltet ist. In der zweiten verschlossenen Verstellposition der Laderaumabdeckung 1 liegt der Mitnehmer an einem Endabschnitt 22 der Führung 2 vor. Dieser Endabschnitt 22 definiert einen Bereich, in dem die durch die Führung 2 vorgegebene Führungsbahn für den Mitnehmer geneigt zu der Horizontalen verläuft, um einem schmalen, plattenförmigen Endstück 11 der Laderaumabdeckung 1 eine bestimmte (größere) Neigung zu der ausgezogenen Abdeckplane 10 vorzugeben, wie nachfolgend noch näher erläutert werden wird.

Das Endstück 11 ist an einer vorderen Stirnseite der Laderaumabdeckung 1 an einer die beiden Längskanten 101 und 102 verbindenden Querkante der Abdeckplane 10 angeordnet. Im Gegensatz zu der Abdeckplane 10, die flexibel und aufwickelbar ausgebildet ist, so dass sie aus einem über eine Vorrichtungshalterung V - zum Beispiel im Bereich einer hinteren Sitzreihe - fixierten Gehäuse mit einer (Lager-) Welle herausgezogen werden kann, ist das Endstück 11 steif(er) ausgebildet. Das Endstück 11 ist eigensteif, so dass es bei ordnungsgemäßer Benutzung nicht verformt, insbesondere nicht verbiegt, und vergleichsweise starr ist. Das Endstück 11 schließt sich in der Richtung an die Abdeckplane 10 an, in die die vordere Querkante zum Schließen der Laderaumabdeckung 1 verlagert wird. Diese Richtung gibt die im Wesentlichen horizontal verlaufende Schließrichtung an und ist in den Figuren mit "R" bezeichnet.

Zur Verbindung des Endstücks 11 mit der Abdeckplane 10 ist an der vorderen Querkante der Abdeckplane 10 eine sich zwischen den beiden Seitenwandungen 101, 102 und quer zur Schließrichtung R erstreckende Zugstange 103 als Übertragungselement vorgesehen. Diese Zugstange 103 ist um eine Schwenkachse verschwenkbar an der Abdeckplane 10 angeordnet und fest mit dem Endstück 11 verbunden, um die Neigung des Endstücks 11 zu der Abdeckplane 10 variieren zu können. Jedes Ende der Zugstange 103 ist vorzugweise mit einem Mitnehmer verbunden und/oder direkt in der zugeordneten Führung 2 gleitend geführt, so dass über eine Verschiebung des jeweiligen Mitnehmers in Schließrichtung R das entsprechende Ende der Zugstange 103 mitverschoben und somit die Laderaumabdeckung 1 geschlossen werden kann.

Das Endstück 11 kann wie in der Darstellung der Fig. 6A und 6B eine Grifföffnung 110 aufweisen. In diese Grifföffnung 110 kann ein Benutzer mit seiner Hand eingreifen, um die Laderaumabdeckung 1 unabhängig von der Antriebseinrichtung manuell zu öffnen und/oder zu schließen.

Das eigensteife Endstück 11 ist entlang der Querkante an der Abdeckplane 10 über die Zugstange 103 angelenkt, so dass das Endstück 11 zu der Abdeckplane 10 geneigt angeordnet werden kann. So soll das Endstück 11 in der aus der Fig. 6B ersichtlichen geschlossenen Verstellposition der Laderaumabdeckung 1 um einen Winkel α₂ geneigt zu der sich horizontal erstreckenden Abdeckplane 10 angeordnet sein, um bei geschlossener Laderaumabdeckung 1 den Laderaum L möglichst effektiv zu überdecken und keinen Einblick in den Laderaum L zu ermöglichen. Hierbei besteht nun aber das Problem, dass eine vergleichsweise große Neigung des Endstücks 11 zu der Abdeckplane 10 insbesondere während dem Schließen der Laderaumabdeckung 1 sehr störend sein kann. So besteht die Gefahr, dass das (zu stark) geneigte Endstück 11 mit einem in dem Laderaum L angeordneten Gegenstand G, zum Beispiel einem Gepäckstück, kollidiert und hierdurch die Verstellung der Laderaumabdeckung 1 beeinträchtigt wird oder sogar das Schließen der Laderaumabdeckung 1 verhindert wird.

Aus diesem Grund ist erfindungsgemäß in dem dargestellten Ausführungsbeispiel vorgesehen, das Endstück 11 während des Überführens der Laderaumabdeckung 1 in ihre zweite, geschlossene Verstellposition in einer Relativlage zu der Abdeckplane 10 zu halten, in der das Endstück 11 eine geringere Neigung α₁ zu der Abdeckplane 10 aufweist als in der zweiten, geschlossenen Verstellposition entsprechend der Fig. 6B. Vorliegend ist hierfür das Endstück 11 über die Zugstange 103 an seinen gegenüberliegenden Längsseiten mit je einem Mitnehmer wirkverbunden, der an einer Führung 2 der jeweiligen Seitenwandung S1 oder S2 entlang gleitend geführt ist. Der Mitnehmer ist dabei derart ausgebildet und entlang der ihm jeweils zugeordneten Führung 2 verstellbar, dass das Endstück 11 während einer Verstellung entlang der Schließrichtung R in einer Relativlage zu der Abdeckplane 10 gehalten wird, in der das Endstück 11 keine oder allenfalls eine geringe Neigung α₁ in Richtung des Laderaums L aufweist. Ferner ist der Mitnehmer hier zwischen wenigstens zwei Positionen, in denen der Mitnehmer bezüglich seiner Führung 2 unterschiedlich ausgerichtet ist, an seiner Führung 2 verschwenkbar ausgeführt, um eine Neigung des Endstücks 11 zu der Abdeckplane 10 für die geschlossene Verstellposition der Laderaumabdeckung 1 zu verändern. Hierdurch ist das Risiko für eine Kollision mit einem in dem Laderaum L angeordneten Hindernis wie dem Gegenstand G deutlich reduziert.

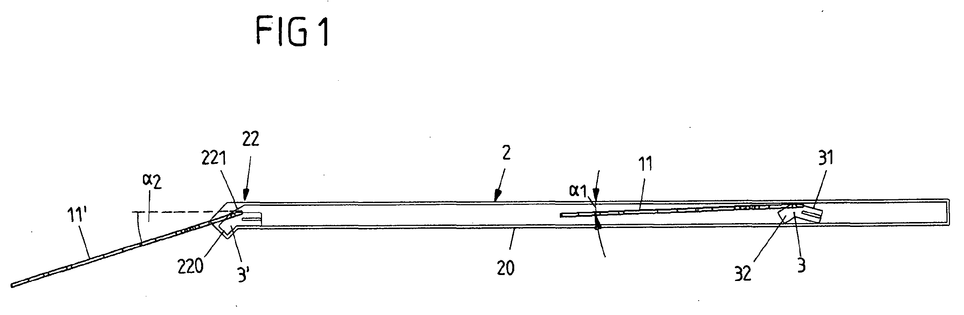

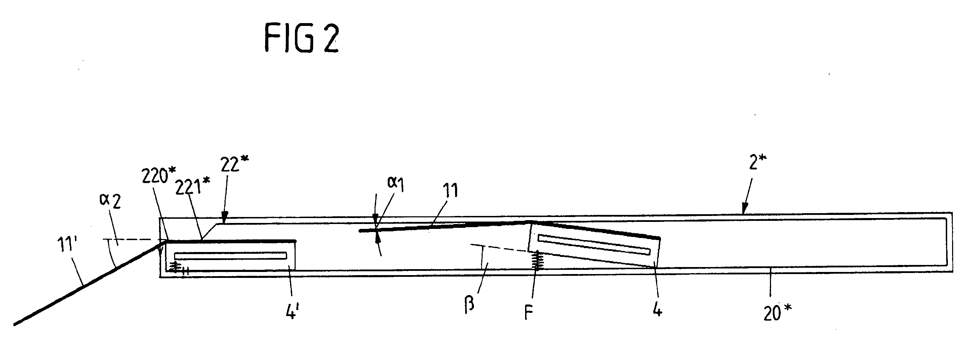

In der Fig. 1 ist im Detail in geschnittener Seitenansicht die an der Seitenwandung S2 angeordnete Führung 2 mit in deren Führungskanal 20 gleitend geführtem Mitnehmer 3, einem daran festgelegten Ende der Zugstange 103 und dem an der Zugstange 103festgelegten Endstück 11 in den beiden möglichen Endpositionen dargestellt. Die Endlage des Endstücks 11 und des Mitnehmers 3, wenn die Laderaumabdeckung 1 vollständig geschlossen ist, in der Fig. 1 (wie auch in den nachfolgenden Fig. 2 bis 5) ebenfalls dargestellt, wobei hier das Endstück 11 und der Mitnehmer 3 (4, 5, 6) zusätzlich mit " ' "gekennzeichnet sind.

Der Mitnehmer 3 ist hier mit zwei unter einem Winkel schenkelartig zueinander verlaufenden Abschnitten, einem Verbindungsabschnitt 31 und einem Endabschnitt 32, ausgebildet. Sowohl der Verbindungsabschnitt 31 als auch der hierzu abgewinkelte Endabschnitt 32 liegen gleitend an derselben (unteren) Innenwand des Führungskanals 20 an. Über die beiden in dem Führungskanal 20 aufliegenden, zueinander abgewinkelten Abschnitte 31 und 32 ist der in dem Führungskanal 20 (vollständig) aufgenommene Mitnehmer 3 gleitend geführt und gibt dabei der daran festgelegten Zugstange 103 sowie dem hieran fixierten eigensteifen Endstück 11 eine bestimmte Relativlage zu der Abdeckplane 10 vor.

Die Abdeckplane 10 kann hierbei grundsätzlich ebenfalls an dem Mitnehmer 3, vorzugsweise an dem Verbindungsabschnitt 31, festgelegt sein. Darüber hinaus kann der Mitnehmer 3 auch mit einem Antriebsmotor der Antriebseinrichtung der Verstellvorrichtung z.B. mittels eines Seilzuges oder einer Zahnstange verbunden sein, um die fremdkraftbetätigte Verstellung der Laderaumabdeckung 1 und damit das Aus- und Einziehen der Abdeckplane 10 zu steuern.

Durch den Mitnehmer 3 wird das Endstück 11 mit einem Neigungswinkel α₁ zu der Abdeckplane 10 gehalten, während die Laderaumabdeckung 1 in ihre zweite, geschlossene Verstellposition verfahren wird. An dem Endabschnitt 22 der Führung 2 weist der Führungskanal 20 einen Knick auf, so dass die durch die Führung 2 vorgegebene Führungsbahn hier geneigt zur Horizontalen verläuft. Die Führung 2 ist im Bereich des Endabschnitts 22 so ausgestaltet und in ihrer Geometrie auf die Kontur des Mitnehmers 3 abgestimmt, dass der Mitnehmer 3 beim Einfahren in den Endabschnitt 22 quer zur Schließrichtung R und damit quer zur Horizontalen, vorliegend nach unten, verschwenkt wird. Durch dieses Verschwenken des Mitnehmers 3 schräg zur Schließrichtung R verschwenkt die Zugstange 103 relativ zum der Abdeckplane 10 und verändert sich die Neigung des damit fest verbundenen Endstücks 11, so dass das Endstück 11 den gewünschten größeren Neigungswinkel α₂ zu der Abdeckplane 10 einnimmt, wenn diese (vollständig) ausgezogen ist.

Um die Verlagerung des Mitnehmers 3 am Ende der Führung 2 gezielt zu steuern und die Neigung des Endstücks 11 kontinuierlich zu vergrößern, weist der Endabschnitt 22 in dem Führungskanal 20 eine zu der Horizontalen geneigte Führungsschräge 221 auf. Entlang dieser Führungsschräge 221 gleitet der Endabschnitt 32 des Mitnehmers 3 entlang, wodurch der Mitnehmer 3 innerhalb des Führungskanals 20 verschwenkt und zwar gerade um einen Winkel α₂-α₁.

Der Endabschnitt 22 der Führung 2 weist zudem einen Formschlussbereich 220 am Ende des Führungskanals 20 auf. In diesen Formschlussbereich 220 ragt der Endabschnitt 32 des Mitnehmers 3 und ist hierin formschlüssig aufgenommen, wenn die Laderaumabdeckung 1 vollständig geschlossen ist. Der Mitnehmer 3 kann in dem Formschlussbereich 220 arretiert sein, wobei aber ein Lösen des sich ergebenden Formschlusses zum Öffnen der Laderaumabdeckung 1 weiterhin problemlos möglich ist, indem der Winkel zwischen den beiden Abschnitten 31 und 32 und damit der damit korrespondierende Winkel der Führungsschräge 221 zu der Horizontalen nicht zu groß gewählt sind. Die Kontur des Mitnehmers 3 und des Führungskanals 20 an dem Endabschnitt 22 mit der Führungsschräge 221 sind so aufeinander abgestimmt, dass sich die Neigung des Endstücks 11 bei einer Verstellung des Mitnehmers 3 in dem Endabschnitt 22 kontinuierlich vergrößert und der Mitnehmer 3 gleitend in den Formschlussbereich 220 einfährt.

Durch die gezeigte Ausführung des Mitnehmers 3 und seiner Führung 2 ist es möglich, das steife Endstück 11 über nahezu den gesamten Verstellweg bis zum Erreichen seiner Endlage in der vollständig geschlossenen Verstellposition der Laderaumabdeckung 1 so kollisionsvermeidend auszurichten, dass das Endstück 11 nicht oder kaum in den Laderaum L hineinragt. Erst am Ende des Verstellwegs wird dann dem Endstück 11 die gewünschte (größere) Neigung α₂ durch den Mitnehmer 3 und die Führung 2 vorgegeben und damit eine andere Relativlage zu der Abdeckplane 10.

In der Fig. 2 ist in mit der Fig. 1 übereinstimmender Ansicht ein zweites Ausführungsbeispiel einer erfindungsgemäßen Verstellvorrichtung gezeigt, von der auch hier erneut nur eine Führung 2*, ein Mitnehmer 4 und teilweise das mit dem Mitnehmer 4 verbundene Endstück 11 dargestellt sind.

Der Mitnehmer 4 ist hier im Querschnitt rechteckförmig ausgeführt und erneut gleitend in einem Führungskanal 20* der Führung 2* geführt, um ihm eine definierte Führungsbahn während der Verstellung der Laderaumabdeckung 1 vorzugeben. Hier ist der Mitnehmer 4 über ein Federelement F, z. B. in Form einer Schraubendruckfeder, in eine erste Position innerhalb der Führung 2* vorgespannt, in der das daran festgelegte Endstück 11 den vergleichsweise kleinen Neigungswinkel α₁ zu der Abdeckplane 10 einnimmt. Über das an einem vorderen Ende des Mitnehmers 4 angreifende Federelement F liegt der Mitnehmer 4 innerhalb des Führungskanals 20*, um einen Anstellwinkel β verkippt vor und wird in dieser Position durch das Federelement F über nahezu den gesamten Verstellweg der Laderaumabdeckung 1 gehalten, bis die Laderaumabdeckung 1 vollständig geschlossen ist.

Kurz vor dem Erreichen der vollständig geschlossenen Verstellposition der Laderaumabdeckung 1 gleitet der Mitnehmer 4 an einer innerhalb der Führung 2* vorgesehenen Führungsschräge 221* entlang. Hierdurch wird das Mitnehmerelement 4 entgegen der von dem Federelement F aufgebrachten Federkraft (hier entgegen dem Uhrzeigersinn) innerhalb der Führung 20* verschwenkt und das Federelement F komprimiert. Durch das Verschwenken des Mitnehmers 4 um den Anstellwinkel β erhöht sich die Neigung des mit dem Mitnehmer 4 verbundenen Endstücks 11 bis zu dem Winkel α₂.

Die Führungsschräge 221* ist an einem Endabschnitt 22* der Führung 2* vorgesehen. Der Endabschnitt 22* weist ebenfalls einen Formschlussbereich 220* am Ende der durch den Führungskanal 20* vorgegebenen Führungsbahn auf, in den der Mitnehmer 4 eingreift, wenn die Laderaumabdeckung 1 vollständig geschlossen ist. Über diesen Formschlussbereich 220* ist der Mitnehmer 4 entsprechend der in der Fig. 2 dargestellten Position 4' in einer zweiten Position innerhalb des Führungskanals 20* gehalten, in der das Endstück 11 in der in der Figur 2 dargestellten Position 11' die vorgegeben Neigung α₂ zu der Abdeckplane 10 einnimmt. Der Formschlussbereich 220* stellt sich hierbei als eine Verjüngung des Führungskanals 20* dar, die sich an die Führungsschräge 221* anschließt, so dass der Mitnehmer 4 automatisch hierin einfährt, wenn die Laderaumabdeckung 1 vollständig geschlossen wird. Wird die Laderaumabdeckung 1 wieder entgegen der Schließrichtung R geöffnet und gelangt hierbei der Mitnehmer 4 aus dem Formschlussbereich 220*, drückt das Federelement F den Mitnehmer 4 wieder automatisch in seine verkippte Lage und damit das Endstück 11 nach oben, so dass sich dessen Neigung relativ zu der Abdeckplane 10 reduziert.

Das Federelement F ist vorliegend über ein sich in dem Führungskanal 20* abstützendes Ende gleitend innerhalb der Führung 2* geführt. Beispielsweise kann an dem sich in dem Führungskanal 20* abstützenden Ende ein Gleitstein vorgesehen sein.

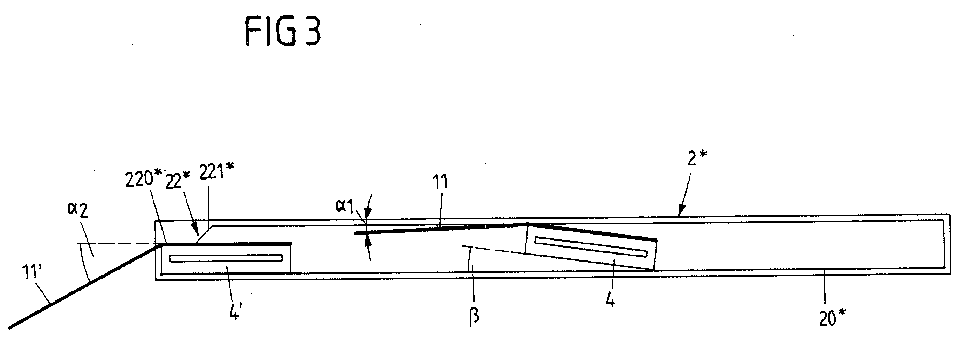

Die Weiterbildung gemäß der Fig. 3 ist nahezu identisch zu dem Ausführungsbeispiel der Fig. 2 ausgestaltet. In dem Ausführungsbeispiel der Fig. 3 wurde lediglich das Federelement F ausgespart. Die verkippte Lage des Mitnehmers 4 wird hierin vorzugsweise durch eine an der Zugstange 103 angreifende und/oder durch die an der Abdeckplane 10 selbst angreifende Federvorspannung erreicht. So ist die schwenkbare Zugstange 103 zum Beispiel durch eine hier nicht dargestellte Spannvorrichtung in eine Relativlage zu der Abdeckplane 10 vorgespannt. Weiterhin kann die Abdeckplane 10 vorzugsweise über wenigstens ein Rückstellelement der Antriebseinrichtung entgegen der Schließrichtung R belastet sein, so dass sich die Abdeckplane 10 automatisch wieder aufwickelt und damit die Laderaumabdeckung 1 geöffnet wird, sobald fremdkraftbetätigt oder manuell eine Arretierung der Laderaumabdeckung 1 in der gerade eingenommenen Verstellposition gelöst wird.

Über eine oder beide genannte Federvorspannungen der Zugstange 103 und/oder der Abdeckplane 10 wird nun der Mitnehmer 4 in den Führungskanal 20* verkippt gehalten, bis durch eine Verringerung der Höhe des Führungskanals 20* an dem Endabschnitt 22* an der Führungsschräge 221* dem Mitnehmer 4 eine Kippbewegung (entgegen dem Uhrzeigersinn und) entgegen der Wirkung der Federvorspannung der Abdeckplane 10 aufgezwungen wird. Hierdurch wird dann auch das mit dem Mitnehmer 4 verbundene steife Endstück 11 entsprechend geneigt. Dabei ist die von einem Antriebsmotor der Antriebseinrichtung aufgebrachte Verstellkraft zur Verstellung des Mitnehmers 4 entlang der Führung 2* selbstverständlich größer als eine Rückstellkraft auf die Laderaumabdeckung 1 infolge der Federvorspannung.

Bevorzugt wird bei der Ausführungsvariante der Figur 3 eine Federvorspannung der Zugstange 103 ausgenutzt, um hierüber den mit einem Ende der Zugstange 103 verbundenen Mitnehmer 4 vorzubelasten, so dass das Endstück 11 während der Verstellung der Laderaumabdeckung 1 nicht oder kaum in den Laderaum L ragt und erst beim Schließen der Laderaumabdeckung 1 durch das Entlangführen des Mitnehmers 4 an der Führungsschräge 221* die (größere) Neigung α₂ für das Endstück 11 vorgegeben wird.

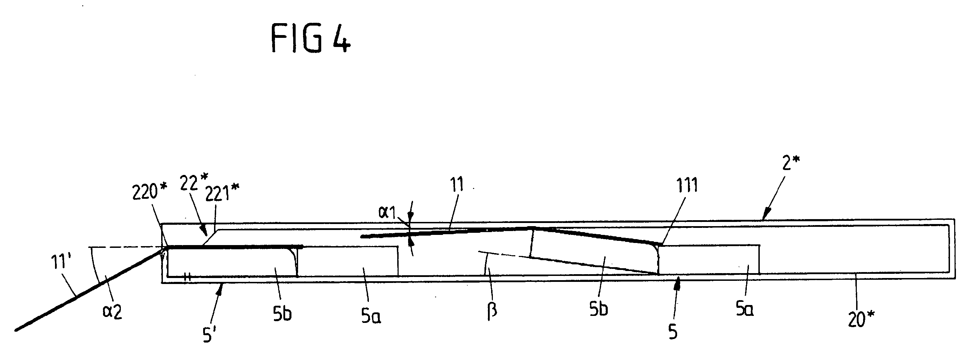

Bei dem in der Fig. 4 in mit den Fig. 1 bis 3 übereinstimmender Ansicht dargestelltem viertem Ausführungsbeispiel einer erfindungsgemäßen Verstellvorrichtung ist ein zweiteilig ausgeführter Mitnehmer 5 vorgesehen, der in einer Führung 2* entsprechend dem Ausführungsbeispiel der Fig. 2 und 3 gleitend geführt ist. Auch hier wird über den Mitnehmer 5 dem Endstück 11 außerhalb der geschlossenen Verstellposition der Laderaumabdeckung 1 eine Relativlage zu der sich im ausgezogenen Zustand der horizontal erstreckenden Abdeckplane 10 vorgegeben, in der das Endstück 11 nicht in den Laderaum L oder allenfalls nur geringfügig hineinragt.

Der Mitnehmer 5 weist hier zwei - gegebenenfalls gelenkig miteinander verbundene - Mitnehmerteile 5a und 5b auf. Das bezogen auf die Schließrichtung R hintere, erste Mitnehmerteil 5a ist hier unbeweglich relativ zu der Führung 2* ausgeführt und gleitet über eine Gleitfläche während einer Verstellung der Laderaumabdeckung 1 an einer Innenseite des Führungskanal 20*. Das andere, zweite Mitnehmerteil 5b ist relativ zu dem ersten Mitnehmerteil 5a verschwenkbar ausgeführt und mit Endstück 11 fest verbunden. Das zweite Mitnehmerteil 5b wird bevorzugt durch ein der Führung 2* gleitend gelagertes Ende der Zugstange 103 gebildet, das zum Schließen der Laderaumabdeckung 1 von dem ersten Mitnehmerteil 5a in Schließrichtung R gedrückt wird.

Auch hier wird über die Federvorspannung der Zugstange 103 dem Endstück 11 eine Relativlage mit geringer Neigung α₁ zu der Abdeckplane 10 vorgegeben. Dabei zieht die Federvorspannung der Zugstange 103 das Endstück 11 und hierdurch das damit verbundene zweite Mitnehmerteil 5b entgegengesetzt zur Schließrichtung R in Richtung auf die Vorrichtungshalterung V. Indem der Führungskanal 20* eine größere Höhe als das zweite Mitnehmerteil 5b aufweist, wird dieses hierdurch um einen Anlenkpunkt an dem ersten Mitnehmerteil 5a verkippt. Das damit um einen Anstellwinkel β relativ zu dem ersten Mitnehmerteil 5a abgewinkelte zweite Mitnehmerteil 5b hält somit das Endstück 11 mit geringer Neigung α₁ oder parallel zu der Abdeckplane 10, solang die Laderaumabdeckung 1 nicht vollständig geschlossen ist.

Über die am Endabschnitt 22* der Führung 2* vorgesehene Führungsschräge 221*, an der das zweite Mitnehmerteil 5b entlang gleiten kann, wird das zweite Mitnehmerteil 5b beim Auflaufen auf die Führungsschräge 221* relativ zu dem ersten Mitnehmerteil 5a (entgegen dem Uhrzeigersinn) und entgegen der Federvorspannung der Zugstange 103 verschwenkt, so dass sich die Neigung des Endstücks 11 erhöht. Über den Formschlussbereich 220* wird dann das zweite Mitnehmerteil 5b in der zweiten Position relativ zu dem ersten Mitnehmerteil 5a mit maximaler Neigung des Endstücks 11 gehalten, bis die Laderaumabdeckung 1 wieder geöffnet wird.

Es kann selbstverständlich vorgesehen sein, dass das zweite Mitnehmerteil 5b über eine Federvorspannung der Abdeckplane 10 in seine erste, verkippte Lage (zusätzlich) vorbelastet ist.

In einer möglichen Weiterbildung kann auch vorgesehen sein, dass das Endstück 11 über einen elastischen Verbindungsbereich 111 auch mit dem bezogen auf die Schließrichtung R hinteren ersten Mitnehmerteil 5a verbunden ist oder dass eine elastisch ausgebildete Abdeckplane 10 mit dem ersten Mitnehmerteil 5a verbunden ist. Zur Vorspannung der beiden Mitnehmerteile 5a, 5b aufeinander zu entsprechend der in der Fig. 4 rechts ersichtlichen Endposition kann alternativ oder ergänzend ein Federelement vorgesehen sein. Dieses Federelement kann sich beispielsweise analog zu dem Ausführungsbeispiel der Fig. 2 an der Führungskanal 20* und dem zweiten Mitnehmerteil 5b abstützen und als Druckfeder ausgebildet sein. Auch die Anordnung eines als Zugfeder ausgebildeten Federelements zwischen den beiden Mitnehmerteilen 5a, 5b ist grundsätzlich denkbar, wobei ein solches Federelement mit je einem Ende an einem der Mitnehmerteile 5a, 5b angreifen würde.

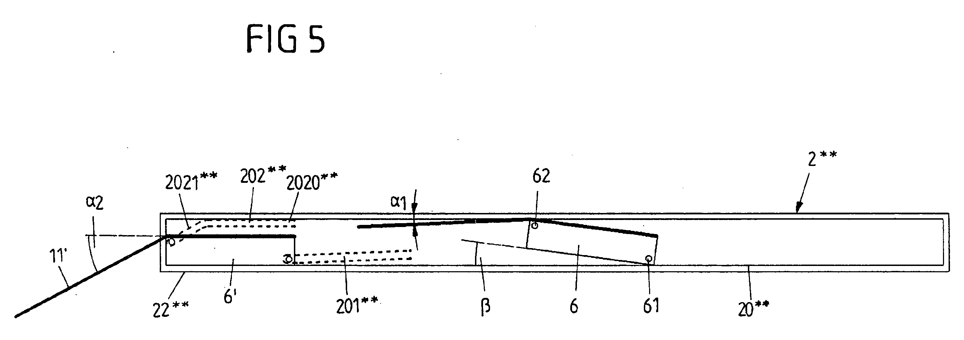

Bei dem in der Fig. 5 dargestellten fünften Ausführungsbeispiel ist ein Mitnehmer 6 vorgesehen, der in Analogie zu dem Ausführungsbeispiel der Figur 3 über die Federvorspannung der Zugstande 103 und/oder der Abdeckplane 10 dauerhaft über nahezu den gesamten Verstellweg der Laderaumabdeckung 1 in einer verkippten Lage innerhalb eines Führungskanals 20** einer Führung 2** gehalten ist und hierbei einen Anstellwinkel β zu der Horizontalen einnimmt, wodurch das mit dem Mitnehmer 6 verbundene Endstück 11 parallel zu der Abdeckplane 10 orientiert ist oder zumindest nur den vergleichsweise kleinen Neigungswinkel α₁ zu der Abdeckplane 10 einnimmt.

Um hier den Mitnehmer 6 und damit das Endstück 11 in die gewünschte maximal in Richtung des Laderaums L geneigte Lage zu bringen, wenn die Laderaumabdeckung 1 vollständig geschlossen ist, weist die Führung 2** wenigstens an ihrem Endabschnitt 22** eine Kulissenführung mit zwei Führungskulissen 201** und 202** für den Mitnehmer 6 auf. In diese Führungskulissen 201** und 202** greift der Mitnehmer 6 über zwei hieran ausgebildete Führungsabschnitte in Form von Führungszapfen 61 und 62 ein. Diese sich gegenüberliegenden Führungszapfen 61, 62 liegen benachbart zu einander zugewandten Innenwänden des Führungskanals 20* vor, wenn der Mitnehmer 6 um den Anstellwinkel β innerhalb des Führungskanals 20** verkippt ist. Die Führungskulissen 201** und 202** sind so innerhalb des Führungskanals 20** angeordnet und ausgebildet, dass die Führungszapfen 61 und 62 in die ihnen jeweils zugeordnete Führungskulisse 201** bzw. 202** automatisch eingeführt werden, wenn die Laderaumabdeckung 1 ausreichend weit in Schließrichtung R geschlossen wurde. Dabei gibt eine Führungskulisse 202** über zwei aufeinander folgende Kulissenabschnitte 2020** und 2021** eine Kulissenbahn für einen Führungszapfen 62 an dem hochgestellten Ende des Mitnehmers 6 vor, über die der Mitnehmer 6 entgegen der Federvorspannung der Abdeckplane 10 oder der Federvorspannung einer Zugstange 103 (entgegen dem Uhrzeigersinn) verkippt wird, so dass sich die Neigung des mit dem Mitnehmer 6 verbundenen Endstücks 11 bezogen auf die Abdeckplane 10 und die Horizontale erhöht, wenn die Laderaumabdeckung 1 ihre geschlossen Verstellposition erreicht.

Dabei verläuft der erste Kulissenabschnitt 2020** der Führungskulisse 202** noch im Wesentlichen horizontal und parallel zu der Haupterstreckungsrichtung der geradlinig verlaufenden Führung 2**. Der sich hieran in Schließrichtung R anschließende zweite Kulissenabschnitt 2021** verläuft geneigt hierzu, so dass der in der Führungskulisse 202** gleitende Führungszapfen 62 des Mitnehmers 6 entlang des abgewinkelten bzw. schräg verlaufenden zweiten Kulissenabschnitts 2021** den Mitnehmer 6 um den anderen Führungszapfen 61 (entgegen dem Uhrzeigersinn) verkippt.

In einer möglichen Ausführungsvariante erstrecken sich die Führungskulissen 201** und 202** über nahezu die gesamte Länger der Führung 2**, so dass der Mitnehmer 6 über seine Führungszapfen 61, 62 über seinen gesamten möglichen Verstellweg in den Führungskulissen 201**, 202** geführt ist. In der Figur 5 wären somit lediglich die Endbereiche dieser Führungskulissen 201** und 202** dargestellt. Außerhalb des Endabschnitts 22** weisen derartige Führungskulissen 201**, 202** einen zu der Schließrichtung R und zueinander im Wesentlichen parallelen Verlauf auf.

In dieser Ausführungsvariante wäre zudem eine Vorspannung des Mitnehmers 6 in seine verkippte Lage außerhalb der zweiten, geschlossenen Verstellposition der Laderaumabdeckung 1 z.B. mithilfe der Federvorspannung der Zugstange 103 nicht notwendig. Die verkippt Lage des Mitnehmers 6 könnte hier allein über die Führungskulissen 201** und 202** vorgegeben werden.

Über die Ausformung von Führungskulissen innerhalb eines Führungskanals können in einfacher Weise aufwendige Verstellkinematiken für den in dem Führungskanal geführten Mitnehmer vorgegeben werden.

Bei allen dargestellten Ausführungsvarianten ist ein Mitnehmer 3, 4, 5 oder 6 auch quer zur Schließrichtung R verlagerbar, um dem damit verbundenen Endstück 11 eine andere Relativlage bezogen auf die Abdeckplane 10 bei Erreichen der vollständig geschlossenen Verstellposition der Laderaumabdeckung 1 vorzugeben. Dabei ist der Mitnehmer 3, 4, 5 oder 6 jeweils innerhalb seiner Führung 2, 2* oder 2** um eine horizontal verlaufende Querachse verschwenkbar, die senkrecht zur Schließrichtung R verläuft. Durch Zusammenspiel der Geometrien der jeweiligen Mitnehmer 3, 4, 5 oder 6 und der jeweiligen Führung 2, 2*, 2** wird dabei der Mitnehmer 3, 4, 5 oder 6 am Ende einer Verstellbewegung der Laderaumabdeckung 1 verlagert, um dem Endstück 11 eine (größere) Neigung zu der Horizontalen vorzugeben als während einer Verstellung vor Erreichen der vollständig geschlossenen Verstellposition. Obwohl mit den dargestellten Verstellvorrichtungen eine gezielte Verstellung des Endstücks 11 gesteuert werden kann, müssen durch die gewählten Ausgestaltungen der Mitnehmer 3, 4, 5, 6 die hierfür vorgesehenen Führungen 2, 2* oder 2** nicht sehr komplex sein, sondern können weiterhin relativ einfach ausgeführt sein.

In allen gezeigten Ausführungsvarianten findet zudem eine kontrollierte Änderung der Neigung des Endstücks 11 sowie eine Lageänderung des Mitnehmers 3, 4, 5 oder 6 bezüglich der Horizontalen und/oder bezüglich der Führung 2, 2*, 2** sowohl bei einem vollständigen Schließen als auch bei einem Öffnen der vollständig geschlossenen Laderaumabdeckung statt. Demgemäß ist in diesen Ausführungsvarianten auch bei einem Öffnen der Laderaumabdeckung 1 das Risiko für eine Kollision des Endstücks 11 mit einem in dem Laderaum L angeordneten Gegenstand G deutlich reduziert. Durch die Verschwenkbarkeit des Mitnehmers 3, 4, 5 oder 6 innerhalb seiner jeweiligen Führung 2, 2*, 2** ist zudem sichergestellt, dass bei Erreichen der geschlossenen Verstellposition die Abdeckplane 10 nicht weiter oder allenfalls nur geringfügig weiter ausgezogen wird und nur eine Kippbewegung des Endstücks 11 erzeugt wird, um dessen (größere) Neigung zu der Abdeckplane 10 einzustellen. Ein Verstellweg für das Endstück 11 und die Abdeckplane 10 entlang der Schließrichtung R wird somit durch die erfindungsgemäße Lösung nicht verändert. Es wird vielmehr lediglich am Ende des Verstellwegs über den verschwenkbar in seiner Führung 2, 2*, 2** angeordneten Mitnehmer 3, 4, 5 oder 6 ein automatisches Verschwenken des Endstücks 11 relativ zu der Abdeckplane 10 erreicht.

Die Mitnehmer 4, 5 und 6 der Ausführungsbeispiele der Fig. 2 bis 5 sind hierbei zudem innerhalb der jeweiligen Führung 2*, 2** relativ zu dem jeweils hierdurch definierten Führungskanal 20*, 20** zwischen zwei Positionen entgegen einer Federkraft verlagerbar, wobei diese Federkraft von einem separaten Federelement F und/oder einer an der Zugstange 103 angreifenden Federvorspannung, gegebenenfalls auch von der Federvorspannung der Abdeckplane 10 aufgebracht wird. Gerade im letzteren Fall kann eine die automatische Rückstellung der Laderaumabdeckung 1 unterstützende und ohnehin vorhandene Federvorspannung der Abdeckplane 10 für die Vorgabe der Neigung des Endstücks 11 ausgenutzt werden.

### Bezugszeichenliste

- 1: Laderaumabdeckung
- 10: Abdeckplane (Flächenabschnitt)
- 101, 102: Längskante
- 103: Zugstange (Übertragungselement)
- 11, 11': Endstück
- 110: Grifföffnung
- 111: Verbindungsbereich
- 2, 2*, 2**: Führung
- 20, 20*, 20**: Führungskanal
- 201**, 202**: Führungskulisse
- 2020**: 1. Kulissenabschnitt
- 2021**: 2. Kulissenabschnitt
- 21: Halteabschnitt
- 22, 22*, 22**: Endabschnitt
- 220, 22*: Formschlussbereich
- 221,221*: Führungsschräge
- 3, 3': Mitnehmer
- 31: Verbindungsabschnitt
- 32: Endabschnitt
- 4, 4': Mitnehmer
- 5, 5': Mitnehmer
- 5a, 5b: Mitnehmerteil
- 6, 6': Mitnehmer
- 61, 62: Führungszapfen (Führungsabschnitt)
- F: Federelement
- G: Gegenstand
- L: Laderaum
- R: Schließrichtung
- S1, S2: Seitenwandung
- V: Vorrichtungshalterung
- α₁, α₂: Winkel
- β: Anstellwinkel

## Patentansprüche

1. Verstellvorrichtung mit einer Abdeckung (1) für einen Laderaum (L) eines Fahrzeugs und mit einer motorischen Antriebseinrichtung wenigstens zum Überführen der Abdeckung (1) von einer ersten Verstellposition, in der ein Flächenabschnitt (10) der Abdeckung (1) den Laderaum (L) nicht überdeckt, entlang einer Schließrichtung (R) in eine zweite Verstellposition, in der der Flächenabschnitt (10) den Laderaum (L) des Fahrzeugs zumindest teilweise überdeckt, wobei
- die Antriebseinrichtung wenigstens eine Führung (2) und ein entlang der Führung (2) geführtes Mitnehmerelement (3) aufweist, das mit der Abdeckung (1) verbunden und beim Überführen der Abdeckung (1) in ihre zweite Verstellposition entlang der Führung (2) verstellbar ist, und
- die Abdeckung (1) ein in Schließrichtung (R) liegendes Endstück (11) aufweist, das gegenüber dem Flächenabschnitt (10) schwenkbar gelagert ist, so dass es sich in der zweiten Verstellposition der Abdeckung (1) geneigt zu dem Flächenabschnitt (10) erstrecken kann,
wobei das Endstück (11) mit dem Mitnehmerelement (3) wirkverbunden ist und das Mitnehmerelement (3) derart ausgebildet und entlang der Führung (2) verstellbar ist, dass das Endstück (11) während des Überführens der Abdeckung (1) in die zweite Verstellposition in einer Relativlage zu dem Flächenabschnitt (10) gehalten ist, in der das Endstück (11) eine geringere Neigung (α₁) zu dem Flächenabschnitt (10) in Richtung des Laderaums (L) aufweist als in der zweiten Verstellposition,
wobei das Mitnehmerelement (3) zwischen wenigstens zwei Positionen, in denen das Mitnehmerelement (3) bezüglich seiner Führung (2) unterschiedlich ausgerichtet ist, an seiner Führung (2) um eine Achse verschwenkbar ist, die senkrecht zur Schließrichtung (R) verläuft, wobei das Mitnehmerelement (3) hierfür innerhalb eines Führungskanals (20) der Führung (2) verschieblich untergebracht und in dem Führungskanal (20) zusätzlich zwischen den wenigstens zwei Positionen verschwenkbar ist, und dem Endstück (11) durch die erste Position des Mitnehmerelements (3) eine andere Relativlage zu dem Flächenabschnitt (10) vorgegeben wird als durch die zweite Position
**dadurch gekennzeichnet, dass**
das Mitnehmerelement (3) zwei unter einem Winkel schenkelartig zueinander verlaufende Abschnitte (31, 32) aufweist, die beide gleitend an derselben Innenwand des Führungskanals (20) anliegen.

2. Verstellvorrichtung mit einer Abdeckung (1) für einen Laderaum (L) eines Fahrzeugs und mit einer motorischen Antriebseinrichtung wenigstens zum Überführen der Abdeckung (1) von einer ersten Verstellposition, in der ein Flächenabschnitt (10) der Abdeckung (1) den Laderaum (L) nicht überdeckt, entlang einer Schließrichtung (R) in eine zweite Verstellposition, in der der Flächenabschnitt (10) den Laderaum (L) des Fahrzeugs zumindest teilweise überdeckt, wobei,
- die Antriebseinrichtung wenigstens eine Führung (2*, 2**) und ein entlang der Führung (2*, 2**) geführtes Mitnehmerelement (4, 6) aufweist, das mit der Abdeckung (1) verbunden und beim Überführen der Abdeckung (1) in ihre zweite Verstellposition entlang der Führung (2*, 2**) verstellbar ist, und
- die Abdeckung (1) ein in Schließrichtung (R) liegendes Endstück (11) aufweist, das gegenüber dem Flächenabschnitt (10) schwenkbar gelagert ist, so dass es sich in der zweiten Verstellposition der Abdeckung (1) geneigt zu dem Flächenabschnitt (10) erstrecken kann,
wobei das Endstück (11) mit dem Mitnehmerelement (4, 6) wirkverbunden ist und das Mitnehmerelement (4, 6) derart ausgebildet und entlang der Führung (2*, 2**) verstellbar ist, dass das Endstück (11) während des Überführens der Abdeckung (1) in die zweite Verstellposition in einer Relativlage zu dem Flächenabschnitt (10) gehalten ist, in der das Endstück (11) eine geringere Neigung (α₁) zu dem Flächenabschnitt (10) in Richtung des Laderaums (L) aufweist als in der zweiten Verstellposition,
wobei das Mitnehmerelement (4, 6) zwischen wenigstens zwei Positionen, in denen das Mitnehmerelement (4, 6) bezüglich seiner Führung (2*, 2**) unterschiedlich ausgerichtet ist, an seiner Führung (2*, 2**) um eine Achse verschwenkbar ist, die senkrecht zur Schließrichtung (R) verläuft, wobei das Mitnehmerelement (4, 6) hierfür innerhalb eines Führungskanals (20*, 20**) der Führung (2*, 2**) verschieblich untergebracht und in dem Führungskanal (20*, 20**) zusätzlich zwischen den wenigstens zwei Positionen verschwenkbar ist, und dem Endstück (11) durch die erste Position des Mitnehmerelements (4, 6) eine andere Relativlage zu dem Flächenabschnitt (10) vorgegeben wird als durch die zweite Position,
**dadurch gekennzeichnet, dass**
(a) das Mitnehmerelement (4, 6) zwischen einer ersten und einer zweiten Position innerhalb der Führung (2*, 2**) verlagerbar ist und das Mitnehmerelement (4, 6)
- in die erste Position durch eine Federkraft vorgespannt ist, wobei durch die anliegende Federkraft das Mitnehmerelement (4, 6) in seiner ersten Position innerhalb des Führungskanals (20*, 20**) um einen Anstellwinkel (β) verkippt vorliegt,
- in die zweite Position entgegen der Federkraft verlagert ist, wenn die Abdeckung (1) ihre zweite Verstellposition einnimmt, und
- in der ersten Position dem Endstück (11) eine Neigung (α₁) zu dem Flächenabschnitt (10) vorgibt, die geringer ist als in der zweiten Position,
und/oder
(b) die Führung (2**) an einem Endabschnitt (22**) wenigstens eine Führungskulisse (201**, 202**) aufweist, über die wenigstens ein Abschnitt des Mitnehmerelements (6) schräg zur Schließrichtung (R) verlagerbar ist, bevor die Abdeckung (1) ihre zweite Verstellposition erreicht, wobei ein an dem Mitnehmerelement (6) angeordneter oder ausgebildeter Führungsabschnitt in Form eines Führungszapfens (61, 62) oder Gleitsteins in die Führungskulisse (201**, 202**) des Endabschnitts (22**) eingreift und hierin gleitend geführt ist, um dem Mitnehmerelement (6) über die Führungskulisse (201**, 202**) eine Lageänderung bezüglich der Führung (2**) aufzuzwingen.

3. Verstellvorrichtung nach Anspruch 1 oder 2, **dadurch gekennzeichnet, dass** das Mitnehmerelement (3, 4, 6) in der zweiten Verstellposition der Abdeckung (1) eine bestimmte Neigung (α₂) des Endstücks (11) zu dem den Laderaum (L) zumindest teilweise überdeckenden Flächenabschnitt (10) vorgibt.

4. Verstellvorrichtung nach einem der Ansprüche 1 bis 3, **dadurch gekennzeichnet, dass** zumindest ein Abschnitt des Mitnehmerelements (3, 4, 6) schräg zur Schließrichtung (R) verlagerbar ist.

5. Verstellvorrichtung nach Anspruch 4, **dadurch gekennzeichnet, dass** die Führung (2, 2*, 2**) derart ausgebildet ist, dass zumindest ein Abschnitt des Mitnehmerelements (3, 4, 6) hierüber beim Erreichen der zweiten Verstellposition der Abdeckung (1) schräg zur Schließrichtung (R) verlagert wird, um dem Endstück (11) eine größere Neigung (α₂) zu dem Flächenabschnitt (10) vorzugeben.

6. Verstellvorrichtung nach Anspruch 2 oder nach einem der vorhergehenden Ansprüche 3 bis 5, soweit rückbezogen auf den Anspruch 2, **dadurch gekennzeichnet, dass** das Endstück (11) über ein schwenkbares Übertragungselement (103) mit dem Flächenabschnitt (10) verbunden und diese Übertragungselement (103) in eine Relativlage bezüglich des Flächenabschnitts (10) vorgespannt und mit dem Mitnehmerelement (4) verbunden ist, so dass durch die Vorspannung des Übertragungselements (103) das damit verbundene Mitnehmerelement (4) in seine erste Position vorgespannt ist.

7. Verstellvorrichtung nach Anspruch 2 oder nach einem der vorhergehenden Ansprüche 3 bis 6, soweit rückbezogen auf den Anspruch 2, **dadurch gekennzeichnet, dass** das Mitnehmerelement mehrteilig ausgeführt ist.

8. Verstellvorrichtung nach Anspruch 7, **dadurch gekennzeichnet, dass** bei einem mehrteilig ausgeführten Mitnehmerelement
- wenigstens ein zweites Mitnehmerteil (5b) relativ zu einem ersten Mitnehmerteil (5a) zwischen einer ersten und einer zweiten Position verlagerbar ist und
- das zweite Mitnehmerteil (5b) während des Überführens der Abdeckung (1) in ihre zweite Verstellposition in der ersten Position gehalten ist, wodurch dem Endstück (11) eine geringere Neigung (α₁) zu dem Flächenabschnitt (10) vorgegeben wird als in der zweiten Position, die das zweite Mitnehmerteil (5b) in der zweiten Verstellposition der Abdeckung (1) einnimmt.

9. Verstellvorrichtung nach Anspruch 7 oder 8, **dadurch gekennzeichnet, dass** das zweite Mitnehmerteil (5b) durch ein Ende eines das Endstück (11) mit dem Flächenabschnitt (10) verbindenden Übertragungselements (103) gebildet wird, wobei das Ende des Übertragungselements (103) ebenfalls an der Führung (2*) entlang geführt verstellbar ist.

10. Verstellvorrichtung nach einem der vorhergehenden Ansprüche, **dadurch gekennzeichnet, dass** die Führung (2, 2*, 2**) einen Endabschnitt (22, 22*, 22**) aufweist, in dem das Mitnehmerelement (3, 4, 6) in der zweiten Verstellposition der Abdeckung (1) zumindest teilweise aufgenommen ist, und der Endabschnitt (22, 22*, 22**) und das Mitnehmerelement (3, 4, 6) derart ausgebildet sind, dass bei einer Verstellung des Mitnehmerelements (3, 4, 6) in dem Endabschnitt (22, 22*, 22**) eine Neigung des Endstücks (11) zu dem Flächenabschnitt (10) zunimmt, bis die zweite Verstellposition erreicht ist.

11. Verstellvorrichtung nach einem der vorhergehenden Ansprüche, **dadurch gekennzeichnet, dass** die Führung (2, 2*) an einem Endabschnitt (22, 22*) einen Formschlussbereich (220, 220*) aufweist, in dem das Mitnehmerelement (3, 4) in der zweiten Verstellposition der Abdeckung (1) formschlüssig gehalten ist, und bei einem Überführen der Abdeckung (1) in ihre zweite Verstellposition wenigstens ein Abschnitt des Mitnehmerelements (3, 4) über eine Führungsschräge (221, 221**) der Führung (2, 2*) schräg zur Schließrichtung (R) verlagerbar, um in den Formschlussbereich (220, 220*) zu gelangen.

12. Verstellvorrichtung nach einem der vorhergehenden Ansprüche, **dadurch gekenntzeichnet, dass** das Mitnehmerelement (3, 4, 6) von einem Antriebsmotor der Antriebseinrichtung antreibbar ist, um die Abdeckung (1) in die zweite Verstellposition zu überführen.

## Claims

1. An adjusting device with a cover (1) for a loading space (L) of a vehicle and with a motorized driving device at least for transferring the cover (1) from a first adjustment position, in which a surface portion (10) of the cover (1) does not cover the loading space (L), along a closing direction (R) into a second adjustment position, in which the surface portion (10) at least partly covers the loading space (L) of the vehicle, wherein
- the driving device includes at least one guide (2) and a driver element (3) guided along the guide (2), which is connected with the cover (1) and is adjustable along the guide (2) when the cover (1) is transferred into its second adjustment position, and
- the cover (1) includes an end piece (11) located in closing direction (R), which is pivotally mounted with respect to the surface portion (10), so that in the second adjustment position of the cover (1) it can extend inclined relative to the surface portion (10),
wherein the end piece (11) is operatively connected with the driver element (3) and the driver element (3) is formed such and adjustable along the guide (2) such that during transfer of the cover (1) into the second adjustment position the end piece (11) is held in a position relative to the surface portion (10) in which the end piece (11) has a smaller inclination (α₁) relative to the surface portion (10) in direction of the loading space (L) than in the second adjustment position,
wherein the driver element (3) is pivotable on its guide (2) between at least two positions, in which the driver element (3) is aligned differently, with respect to its guide (2) about an axis which extends vertically to the closing direction (R), wherein for this purpose the driver element (3) is shiftably accommodated within a guide channel (20) of the guide (2) and in the guide channel (20) additionally is pivotable between the at least two positions, and for the end piece (11) another position relative to the surface portion (10) is specified by the first position of the driver element (3) than by the second position,
**characterized in that**
the driver element (3) includes two portions (31, 32) extending like legs at an angle to each other, which both slidingly rest against the same inner wall of the guide channel (20).

2. An adjusting device with a cover (1) for a loading space (L) of a vehicle and with a motorized driving device at least for transferring the cover (1) from a first adjustment position, in which a surface portion (10) of the cover (1) does not cover the loading space (L), along a closing direction (R) into a second adjustment position, in which the surface portion (10) at least partly covers the loading space (L) of the vehicle, wherein
- the driving device includes at least one guide (2*, 2**) and a driver element (4, 6) guided along the guide (2*, 2**), which is connected with the cover (1) and is adjustable along the guide (2*, 2**) when the cover (1) is transferred into its second adjustment position, and
- the cover (1) includes an end piece (11) located in closing direction (R), which is pivotally mounted with respect to the surface portion (10), so that in the second adjustment position of the cover (1) it can extend inclined relative to the surface portion (10),
wherein the end piece (11) is operatively connected with the driver element (4, 6) and the driver element (4, 6) is formed such and adjustable along the guide (2*, 2**) such that during transfer of the cover (1) into the second adjustment position the end piece (11) is held in a position relative to the surface portion (10) in which the end piece (11) has a smaller inclination (α₁) relative to the surface portion (10) in direction of the loading space (L) than in the second adjustment position,
wherein the driver element (4, 6) is pivotable on its guide (2*, 2**) between at least two positions, in which the driver element (4, 6) is aligned differently, with respect to its guide (2*, 2**) about an axis which extends vertically to the closing direction (R), wherein for this purpose the driver element (4, 6) is shiftably accommodated within a guide channel (20*, 20**) of the guide (2*, 2**) and in the guide channel (20*, 20**) additionally is pivotable between the at least two positions, and for the end piece (11) another position relative to the surface portion (10) is specified by the first position of the driver element (4, 6) than by the second position,
**characterized in that**
(a) the driver element (4, 6) is shiftable within the guide (2*, 2**) between a first and a second position, and the driver element (4, 6)
- is pretensioned into the first position by a spring force, wherein due to the spring force applied the driver element (4, 6) in its first position within the guide channel (20*, 20**) is tilted by a pitch angle (β),
- is shifted into the second position against the spring force, when the cover (1) takes its second adjustment position, and
- in the first position specifies an inclination (α₁) relative to the surface portion (10) for the end piece (11), which is smaller than in the second position,
and/or
(b) the guide (2) at one end portion (22**) includes at least one connecting link guide (201**, 202**) via which at least one portion of the driver element (6) is shiftable obliquely to the closing direction (R), before the cover (1) reaches its second adjustment position, wherein a guide portion arranged or formed on the driver element (6) in the form of a guide pin (61, 62) or sliding block engages into the connecting link guide (201**, 202**) of the end portion (22**) and is slidingly guided therein, in order to impose a change in position with respect to the guide (2**) on the driver element (6) via the connecting link guide (201**, 202**).

3. The adjusting device according to claim 1 or 2, **characterized in that** in the second adjustment position of the cover (1) the driver element (3, 4, 6) specifies a particular inclination (α₂) of the end piece (11) relative to the surface portion (10) at least partly covering the loading space (L).

4. The adjusting device according to any of claims 1 to 3, **characterized in that** at least a portion of the driver element (3, 4, 6) is shiftable obliquely to the closing direction (R).

5. The adjusting device according to claim 4, **characterized in that** the guide (2, 2*, 2**) is formed such that at least a portion of the driver element (3, 4, 6) thereby is shifted obliquely to the closing direction (R) when reaching the second adjustment position of the cover (1), in order to specify a larger inclination (α₂) of the end piece (11) relative to the surface portion (10).

6. The adjusting device according to claim 2 or any of the preceding claims 3 to 5, as far as related to claim 2, **characterized in that** the end piece (11) is connected with the surface portion (10) via a pivotable transmission element (103) and this transmission element (103) is pretensioned into a relative position with respect to the surface portion (10) and connected with the driver element (4), so that due to the pretension of the transmission element (103) the driver element (4) connected therewith is pretensioned into its first position.

7. The adjusting device according to claim 2 or any of the preceding claims 3 to 6, as far as related to claim 2, **characterized in that** the driver element has a multi-part design.

8. The adjusting device according to claim 7, **characterized in that** in a driver element with a multi-part design
- at least one second driver part (5b) is shiftable relative to a first driver part - (5a) between a first and a second position, and
- the second driver part (5b) is held in the first position during the transfer of the cover (1) into its second adjustment position, whereby a smaller inclination (α₁) relative to the surface portion (10) is specified for the end piece (11) than in the second position which the second driver part (5b) takes in the second adjustment position of the cover (1).

9. The adjusting device according to claim 7 or 8, **characterized in that** the second driver part (5b) is formed by an end of a transmission element (103) connecting the end piece (11) with the surface portion (10), wherein the end of transmission element (103) likewise is adjustably guided along the guide (2*).

10. The adjusting device according to any of the preceding claims, **characterized in that** the guide (2, 2*, 2**) includes an end portion (22, 22*, 22**) in which the driver element (3, 4, 6) is at least partly accommodated in the second adjustment position of the cover (1), and the end portion (22, 22*, 22**) and the driver element (3, 4, 6) are formed such that during an adjustment of the driver element (3, 4, 6) in the end portion (22, 22*, 22**) an inclination of the end piece (11) relative to the surface portion (10) increases, until the second adjustment position is reached.

11. The adjusting device according to any of the preceding claims, **characterized in that** the guide (2, 2*) includes a form-fit region (220, 220*) at an end portion (22, 22*), in which the driver element (3, 4) is positively held in the second adjustment position of the cover (1), and during a transfer of the cover (1) into its second adjustment position at least a portion of the driver element (3, 4) is shiftable obliquely to the closing direction (R) via a guiding slope (221, 221*) of the guide (2, 2*), in order to get into the form-fit region (220, 220*).

12. The adjusting device according to any of the preceding claims, **characterized in that** the driver element (3, 4, 6) is drivable by a drive motor of the driving device, in order to transfer the cover (1) into the second adjustment position.

## Revendications

1. Dispositif de réglage avec un recouvrement (1) pour un espace de chargement (L) d'un véhicule et avec un dispositif d'entraînement motorisé au moins pour le transfert du recouvrement (1) d'une première position de réglage, dans laquelle une section de surface (10) du recouvrement (1) ne recouvre pas l'espace de chargement (L), le long d'un sens de fermeture (R) dans une seconde position de réglage, dans laquelle la section de surface (10) recouvre au moins en partie l'espace de chargement (L) du véhicule,
- le dispositif d'entraînement présentant au moins un guidage (2) et un élément d'entraînement (3) guidé le long du guidage (2) qui est relié au recouvrement et réglable lors du transfert du recouvrement (1) dans sa seconde position de réglage le long du guidage (2) et
- le recouvrement (1) présentant une pièce d'extrémité (11) se trouvant dans le sens de fermeture (R), qui est logée de manière à pouvoir pivoter par rapport à la section de surface (10) de sorte qu'elle puisse s'étendre dans la seconde position de réglage du recouvrement (1) en étant inclinée vers la section de surface (10),
la pièce d'extrémité (11) étant en liaison active avec l'élément d'entraînement (3) et l'élément d'entraînement (3) étant réalisé et réglable le long du guidage (2) de telle manière que la pièce d'extrémité (11) soit maintenue pendant le transfert du recouvrement (1) dans la seconde position de réglage dans une position relative par rapport à la section de surface (10), dans laquelle la pièce d'extrémité (11) présente une inclinaison plus faible (α₁) par rapport à la section de surface (10) en direction de l'espace de chargement (L) que dans la seconde position de réglage,
l'élément d'entraînement (3) pouvant pivoter entre au moins deux positions, dans lesquelles l'élément d'entraînement (3) est orienté différemment par rapport à son guidage (2), sur son guidage (2) autour d'un axe qui s'étend perpendiculairement au sens de fermeture (R), l'élément d'entraînement (3) étant logé de manière coulissante à cet effet dans un canal de guidage (20) du guidage (2) et pouvant en outre pivoter dans le canal de guidage (20) entre les au moins deux positions, et, une autre position relative par rapport à la section de surface que par la seconde position étant prescrite à la pièce d'extrémité (11) par la première position de l'élément d'entraînement (3), **caractérisé en ce que**
l'élément d'entraînement (3) présente deux sections (31, 32) s'étendant selon un angle de type branche l'une par rapport à l'autre, lesquelles reposent toutes les deux par glissement contre la même paroi intérieure du canal de guidage (20).

2. Dispositif de réglage avec un recouvrement (1) pour un espace de chargement (L) d'un véhicule et avec un dispositif d'entraînement motorisé au moins pour le transfert du recouvrement (1) d'une première position de réglage, dans laquelle une section de surface (10) du recouvrement (1) ne recouvre pas l'espace de chargement (L), le long d'un sens de fermeture (R) dans une seconde position de réglage, dans laquelle la section de surface (10) recouvre au moins en partie l'espace de chargement (L) du véhicule,
- le dispositif d'entraînement présentant au moins un guidage (2*, 2**) et un élément d'entraînement (4, 6) guidé le long du guidage (2*, 2**) qui est relié au recouvrement (1) et réglable lors du transfert du recouvrement (1) dans sa seconde position de réglage le long du guidage (2*, 2**) et
- le recouvrement (1) présentant une pièce d'extrémité (11) se trouvant dans le sens de fermeture (R), qui est logée de manière à pouvoir pivoter par rapport à la section de surface (10) de sorte qu'elle puisse s'étendre dans la seconde position de réglage du recouvrement (1) en étant inclinée vers la section de surface (10),
la pièce d'extrémité (11) étant en liaison active avec l'élément d'entraînement (4, 6) et l'élément d'entraînement (4, 6) étant réalisé et réglable le long du guidage (2*, 2**) de telle manière que la pièce d'extrémité (11) soit maintenue pendant le transfert du recouvrement (1) dans la seconde position de réglage dans une position relative par rapport à la section de surface (10), dans laquelle la pièce d'extrémité (11) présente une inclinaison plus faible (α₁) par rapport à la section de surface (10) en direction de l'espace de chargement (L) que dans la seconde position de réglage,
l'élément d'entraînement (4, 6) pouvant pivoter entre au moins deux positions, dans lesquelles l'élément d'entraînement (4, 6) est orienté différemment par rapport à son guidage (2*, 2**), sur son guidage (2*, 2**) autour d'un axe qui s'étend perpendiculairement au sens de fermeture (R), l'élément d'entraînement (4, 6) étant logé de manière coulissante à cet effet dans un canal de guidage (20*, 20**) du guidage (2*, 2**) et pouvant en outre pivoter dans le canal de guidage (20*, 20**) entre les au moins deux positions, et, une autre position relative par rapport à la section de surface (10) que par la seconde position étant prescrite à la pièce d'extrémité (11) par la première position de l'élément d'entraînement (4, 6), **caractérisé en ce que**
(a) l'élément d'entraînement (4, 6) peut être déplacé entre une première et une seconde position dans le guidage (2*, 2**) et l'élément d'entraînement (4, 6),
- est précontraint dans la première position par une force de ressort, l'élément d'entraînement (4, 6) se présentant basculé autour d'un angle d'inclinaison (β) par la force de ressort appliquée dans sa première position dans le canal de guidage (20*, 20**),
- est déplacé dans la seconde position dans le sens inverse à la force de ressort lorsque le recouvrement (1) occupe sa seconde position de réglage et
- prescrit une inclinaison (α₁) par rapport à la section de surface (10) dans la première position à la pièce d'extrémité (11), laquelle est plus faible que dans la seconde position,
et/ou
(b) le guidage (2**) présente sur une section d'extrémité (22**) au moins une coulisse de guidage (201**, 202**), par laquelle au moins une section de l'élément d'entraînement (6) peut être déplacée en biais par rapport au sens de fermeture (R), avant que le recouvrement (1) n'atteigne sa seconde position de réglage, une section de guidage réalisée ou agencée sur l'élément d'entraînement (6) s'engageant sous la forme d'un tenon de guidage (61, 62) ou d'un coulisseau dans la coulisse de guidage (201**, 202**) de la section d'extrémité (22**) et étant guidée dedans par glissement afin d'imposer à l'élément d'entraînement (6) par la coulisse de guidage (201**, 202**) une modification de position par rapport au guidage (2**).

3. Dispositif de réglage selon la revendication 1 ou 2, **caractérisé en ce que** l'élément d'entraînement (3, 4, 6) prescrit, dans la seconde position de réglage du recouvrement (1), une inclinaison déterminée (α₂) de la pièce d'extrémité (11) par rapport à la section de surface (10) recouvrant au moins en partie l'espace de chargement(L).

4. Dispositif de réglage selon l'une quelconque des revendications 1 à 3, **caractérisé en ce qu'**au moins une section de l'élément d'entraînement (3, 4, 6) peut être déplacée en biais par rapport au sens de fermeture (R).

5. Dispositif de réglage selon la revendication 4, **caractérisé en ce que** le guidage (2, 2*, 2**) est réalisé de telle manière qu'au moins une section de l'élément d'entraînement (3, 4, 6) soit déplacée par là lors de l'atteinte de la seconde position de réglage du recouvrement (1) en biais par rapport au sens de fermeture (R) afin de prescrire à la pièce d'extrémité (11) une plus grande inclinaison (α₂) par rapport à la section de surface (10).

6. Dispositif de réglage selon la revendication 2 ou selon l'une quelconque des revendications précédentes 3 à 5, dans la mesure où elle est relative à la revendication 2, **caractérisé en ce que** la pièce d'extrémité (11) est reliée par un élément de transmission pivotant (103) à la section de surface (10) et cet élément de transmission (103) est précontraint dans une position relative par rapport à la section de surface (10) et est relié à l'élément d'entraînement (4) de sorte que par la précontrainte de l'élément de transmission (103), l'élément d'entraînement (4) reliée à celui-ci soit précontraint dans sa première position.

7. Dispositif de réglage selon la revendication 2 ou selon l'une quelconque des revendications précédentes 3 à 6, dans la mesure où elle est relative à la revendication 2, **caractérisé en ce que** l'élément d'entraînement est réalisé en plusieurs parties.

8. Dispositif de réglage selon la revendication 7, **caractérisé en ce que** pour un élément d'entraînement réalisé en plusieurs parties
- au moins une seconde partie d'entraînement (5b) peut être déplacée par rapport à une première partie d'entraînement (5a) entre une première et une seconde position et
- la seconde partie d'entraînement (5b) est maintenue pendant le transfert du recouvrement (1) dans sa seconde position de réglage dans la première position, par quoi une inclinaison plus faible (α₁) par rapport à la section de surface (10) est prescrite à la pièce d'extrémité (11) que dans la seconde position qu'occupe la seconde partie d'entraînement (5b) dans la seconde position de réglage du recouvrement (1).

9. Dispositif de réglage selon la revendication 7 ou 8, **caractérisé en ce que** la seconde partie d'entraînement (5b) est formée par une extrémité d'un élément de transmission (103) reliant la pièce d'extrémité (11) à la section de surface (10), l'extrémité de l'élément de transmission (103) étant aussi réglable en étant guidée le long du guidage (2*).

10. Dispositif de réglage selon l'une quelconque des revendications précédentes, **caractérisé en ce que** le guidage (2, 2*, 2**) présente une section d'extrémité (22, 22*, 22**), dans laquelle l'élément de transmission (3, 4, 6) est reçu au moins en partie dans la seconde position de réglage du recouvrement (1), et la section d'extrémité (22, 22*, 22**) et l'élément d'entraînement (3, 4, 6) étant réalisés de telle manière que lors d'un déplacement de l'élément d'entraînement (3, 4, 6) dans la section d'extrémité (22, 22*, 22**), une inclinaison de la pièce d'extrémité (11) par rapport à la section de surface (10) augmente jusqu'à ce que la seconde position de réglage soit atteinte.

11. Dispositif de réglage selon l'une quelconque des revendications précédentes, **caractérisé en ce que** le guidage (2, 2*) présente, sur une section d'extrémité (22, 22*), une zone à complémentarité de formes (220, 220*), dans laquelle l'élément d'entraînement (3, 4) est maintenu par complémentarité de formes dans la seconde position de réglage du recouvrement (1), et lors d'un transfert du recouvrement (1) dans sa seconde position de réglage, au moins une section de l'élément d'entraînement (3, 4) pouvant être déplacée par un biais de guidage (221, 221*) du guidage (2, 2*) en biais par rapport au sens de fermeture (R) afin de parvenir dans la zone à complémentarité de formes (220, 220*).

12. Dispositif de réglage selon l'une quelconque des revendications précédentes, **caractérisé en ce que** l'élément d'entraînement (3, 4, 6) peut être entraîné par un moteur d'entraînement du dispositif d'entraînement afin de transférer le recouvrement (1) dans la seconde position de réglage.
